# EUROPEAN PATENT APPLICATION

(11) **EP 1 457 908 A2**
(43) Date of publication of application: **15.09.2004**
(21) Application number: 04075837.7
(22) Date of filing: 15.03.2004
(51) Int. Cl.: G06F 17/60

(54) **A method of planning a restructuring of at least two organizations and a system for planning a restructuring of at least two organizations**

(30) Priority: 14.03.2003 US 455087 P; 30.01.2004 US 768404; 30.01.2004 US 768405
(71) Applicant: SAP AG, 69190 Walldorf (DE)
(72) Inventor: Schwerin-Wenzel, Sven, 69234 Dielheim (DE); Kol, Nir, Sunnyvale, CA 94087 (US); Wood, Eric, Menlo Park, CA 94025 (US)
(74) Representative: Winckels, Johannes Hubertus F.

(57) **Abstract**

A method of planning a restructuring of at least two organizations comprising: providing a single logical physically distributed information system across one or more information systems of the at least two organizations that are being combined; and providing a user interface to access the single logical physically distributed information system, wherein the single logical physically distributed information system executes one or more pre-merger activities, merger activities, and/or post-merger activities. The invention further relates to a system for planning a restructuring of at least two organizations.

## Description

### TECHNICAL FIELD

The invention relates to a method of planning a restructuring of at least two organizations and a system for planning a restructuring of at least two organizations

### BACKGROUND

During a restructuring such as a merger and/or acquisition, enterprises undergo many changes. If executed effectively, these changes help an enterprise to achieve one or more goals. To realize those goals in a restructuring environment, members associated with the enterprise changes can be involved in interactive decisions and discussions. Consequently, an enterprise may want to carefully plan and manage parts of one or more organizations or members during the restructuring process.

### SUMMARY

The present application describes systems, methods and software for restructuring, such as mergers & acquisitions (M&As), for one or more organizations.

According to a first aspect, the invention features a method of planning a restructuring of at least two organizations comprising:
providing a single logical physically distributed information system across one or more information systems of the at least two organizations that are being combined; and
providing a user interface to access the single logical physically distributed information system, wherein the single logical physically distributed information system executes one or more pre-merger activities, merger activities, and/or post-merger activities.

In a preferred embodiment, the method includes adapting the user interface to allow a user to access one or more merger resources, to allow a stakeholder to plan and manage the merger activity. In a further preferred embodiment, the method includes providing an intranet interface adapted for at least one employee of one of the enterprises; and providing an extranet interface adapted for an external restructuring member of at least one of the organizations; and providing an information repository related to at least one of the organizations, the information repository being accessible by the intranet interface. A further embodiment includes providing an object modelling tool, a repository, a template, and an interface for a user to edit information for one or more personnel of at least one of the organizations. In a further preferred embodiment, the method includes providing a stakeholder interface, the stakeholder interface comprising: a first panel adapted to allow a user to navigate among a user interfaces related to the merger; a second panel displaying one or more members of one or more groups of the organizations; and a search query interface adapted to allow a user to search for information related to the merger. In a yet further embodiment, the method includes providing the stakeholder interface with a menu for disparate interfaces, the disparate interfaces comprising a communication interface, an information sessions interface, and an organizational directory, the stakeholder interface being further provided with a personalized merger task interface, a merger event interface, and an interface to a calendar. In a further embodiment, the method includes providing a layer of merger application logic services for the merger of at least two organizations; information repositories for the merger; and user interfaces adapted to retrieve information from the information repositories, the user interfaces adapted to interact with the layer of merger application logic services. In a further embodiment, the method includes executing actions for a merger of the at least two organizations, the actions comprising: registering a stakeholder of the merger; and initiating a profile for the stakeholder; allowing a personal delegate to access a merger interface on behalf of the stakeholder, wherein the registering a stakeholder of the merger comprises providing access to a user of a user interface, wherein the providing access comprises requesting a password from the user. In a further embodiment, a merger activity includes a synergy realization. In a further embodiment, the method includes providing a synergy realization user interface, the synergy realization user interface including a synergy targets section, a risks section, and a sub-deliverables section.

According to a second aspect of the present invention, there is provided a system for planning a restructuring of at least two organizations comprising: a single logical physically distributed information system across one or more information systems of the at least two organizations that are being combined; and a user interface to access the single logical physically distributed information system, wherein the single logical physically distributed information system executes one or more pre-merger activities, merger activities, and/or post-merger activities.

According to a third aspect of the present invention, there is provided a user terminal comprising means operable to perform the any of the methods according to the first aspect of the present invention.

According to a fourth aspect of the present invention, there is provided a program storage device readable by a processing apparatus, the device embodying a program of instructions executable by the processor to perform the steps of any of the method of the first aspect of the present invention.

### BRIEF DESCRIPTION OF THE DRAWINGS

These and other aspects will now be described in detail with reference to the following drawings.

FIG. 1 is a block diagram of an exemplary system.

FIG. 2 is a flow diagram of a restructuring integration process.

FIG. 3 is a block diagram of architecture.

FIG. 4 is a block diagram of a platform.

FIGS. 5-26 are exemplary user interfaces generally relating to a stakeholder framework according to embodiments of the present invention.

FIGS. 27-45 are exemplary user interfaces generally relating to synergy realization according to embodiments of the present invention.

Like reference symbols in the various drawings indicate like elements.

### DETAILED DESCRIPTION

The systems and techniques described here relate to software for organizations in a restructuring environment, such as a merger and acquisition (M&A) environment. In particular, the software described provides tools and interfaces for restructuring members during a restructuring process. Further, in particular, the software described herein aides in a realization of synergy, a planning of restructuring strategy, and a management of restructuring deals and initiatives during a corporate restructuring process.

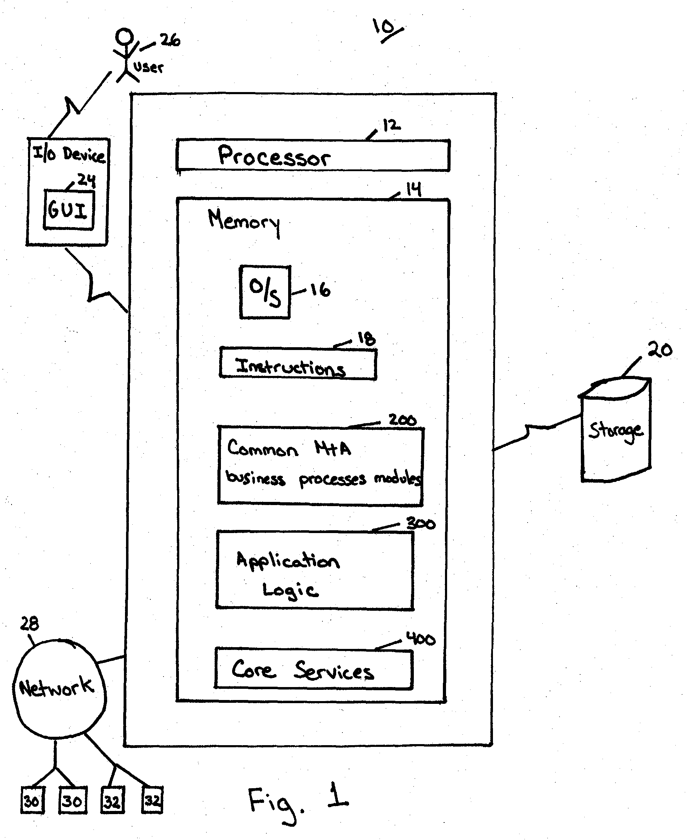

As shown in FIG. 1, a system 10 includes a processor 12 and a memory 14. Memory 14 includes an operating system 16, and instructions 18, that when executed by the processor 12, perform an exemplary restructuring integration process 100, described below. A specific restructuring process, referred to as a merger and acquisition (M&A), will be used as an example throughout this description. However, the process 100 can be applied to most corporate change or restructuring activities, such as spin-offs, department mergers and splits, and so forth. Memory 14 also includes common restructuring business processes modules 200, application logic 300, and a core framework of services 400 that support the restructuring integration process 100. The system 10 includes a link to a storage device 20 and an input/output device 22. The input/output device 22 can include a graphical user interface (GUI) 24 for display to a user 26. The system 10 includes a link to a network 28. Network 28 links the system 10 to other systems 30 within a single entity and to systems 32 in one or more other entities. Systems 30, 32, generally referred to as clients or source systems, access data through a portal 34. Systems 10, 30, 32 are designed to act as a single logical physically distributed information system representing multiple enterprise information systems of organizations residing in the systems 30, 32. Information is exchanged between the system 10 and systems 30, 32 through the portal 34 and through user interfaces (UIs) of architecture, described below.

As used herein, the terms "electronic document" and "document" mean a set of electronic data, including both electronic data stored in a file and electronic data received over a network. An electronic document does not necessarily correspond to a file. A document can be stored in a portion of a file that holds other documents, in a single file dedicated to the document in question, or in a set of coordinated files.

The term "organization" refers to a company, enterprise, business, government, educational institution, or the like. The term "organization" can also refer to a group of persons, such as an association or society.
An "enterprise change" or "organization change" refers to a merger, an acquisition, a combination of a merger and acquisition or some other type of change in an organization's structure, leadership, governance, personnel, business, direction, purpose, strategy, and so forth etc.

A "synergy" can be a value, performance or effect that can be achieved as resources of two organizations combined will be greater than the sum of the separate individual resources. The term "synergy" can also refer to cooperative interaction among groups, especially among the acquired subsidiaries or merged parts of an organization, which creates an enhanced combined effect. For example, if a first organization has a superior product and inferior distribution, and a second company has an inferior product and superior distribution, then the organizations can create synergy with a merger.

The term "object" refers to information sources such as documents, reports, presentations, files and directories.

The disclosed software described herein can use software and structures available from SAP AG of Walldorf, Germany. Instead of or in addition to SAP AG software, the disclosed software can coexist or operate with software and systems that are not provided by SAP AG.

A "template" is an interface that can include parameters or a format from a previous merger, or can be transferred or copied from another employee in the same organization or a customer.

A template from a previous merger can have a "reference model" when planning an action, in which the reference model can include objects, folders, tasks, security settings, and reports. The template can have a predefined taxonomy and a format dependent on a type of merger (e.g., a merger of a large organization with a small organization), a role of the merger member or a phase of the merger. The template can be used by various merger members and can include a common organizational or group structure. The template can have a pre-configured procedure that reflects the preferred practices of achieving one or more work objectives.

"Stakeholders" are exemplary merger members described herein with an interest or stake in the progress of the restructuring, or persons who are involved in some aspect of the restructuring or its effects.
Such members can include external merger experts, such as a management consultant or investment banker, or internal merger members and experts, such as an executive board member or a human resource manager.

A "deliverable" can be referred to as a "task" that one or more stakeholders are responsible for producing for other stakeholders. A deliverable can be referred to as a goal, objective, result or procedure that can be fulfilled, promised, achieved, produced or expected.

A deliverable can also be referred to as a merger-related project.

Due diligence can involve investigation and examination into one or more details of a potential investment, such as an examination of operations and management and a verification of material facts.

Due diligence can serve to confirm material facts regarding a merger or offer, such as reviewing financial records and other items deemed material to the merger.

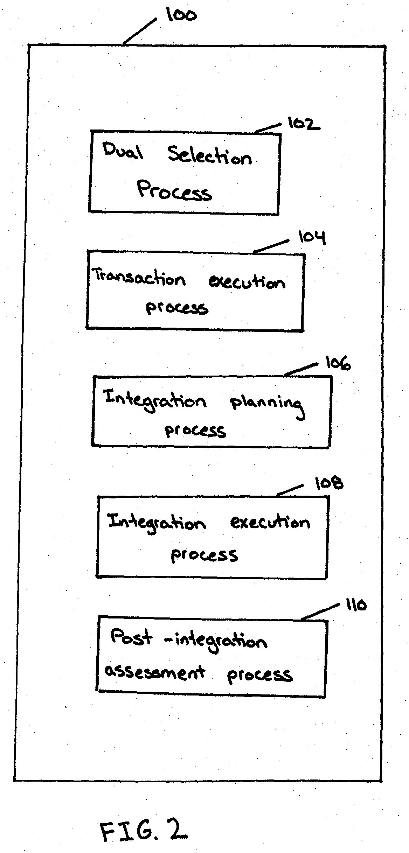

As shown in FIG. 2, the restructuring integration process 100 includes a deal selection process 102. The deal selection process 102 defines acquisition objectives and strategies. The deal selection process 102 searches for the best fit target company to meet a set of objectives and manages detailed due diligence on the target company. The deal selection process 102 also identifies synergies, risks and a realization plan for acquiring the target company.
A transaction execution process 104 structures an acquisition in terms of type, tax implications, legal issues and so forth. The transaction execution process 104 closes an acquisition deal and provides for a rollback in the event the acquisition deal fails.

An integration planning process 106 provides a plan for short term and long term tasks of acquisition integration and communicates goals and decisions to all stakeholders.

The restructuring integration process 100 includes an integration execution process 108. The integration execution process 108 manages an integration project and it sub-projects, designs a new organization, and minimizes disruptions to customers by rolling out combined field organizations quickly.

The integration execution process 108 manages the integration of information technology (IT), human resources (HR), financials and procurement. The integration execution process 108 provides for the retention of key employees, manages field organization integration, and identifies cross-selling opportunities and rolls the opportunities out. The integration execution process 108 manages stakeholders, tracks an acquisition, and reports issues and successes.

The restructuring integration process 100 includes a post-integration assessment process 110. The post-integration assessment process 110 measures achieved synergies against targets, accesses where improvements can be made in synergy estimation and/or in integration execution, and applies history to a next transaction.

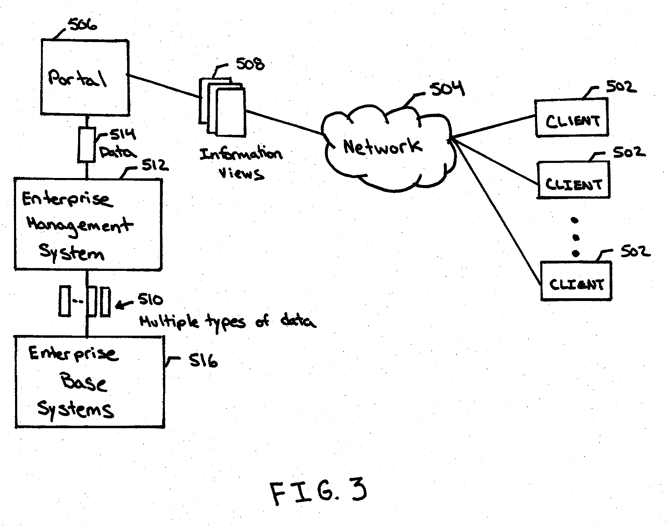

As shown in FIG. 3, the restructuring integration process 100, common restructuring business processes modules 200, application logic 300, and core framework of services 400 are designed to conform to architecture 500 designed to a platform 600 that represents a single logical physically distributed information system representing multiple enterprise information systems of organizations. The architecture 500 / platform 600 insure consistency of data exchange between system 10 and source systems 30, 32, and a separation of source systems 30, 32, when appropriate during phases of the restructuring integration process 100.

The single logical physically distributed information system architecture 500 representing multiple enterprise information systems of organizations includes multiple clients 502 accessing data over a network 504 through a portal 506. In one embodiment, the clients 502 are processes and/or web browsers that are coupled to the network 504 through a proxy server (not shown).

The portal 506 provides a common interface to program management services through user interface (UI) components 508.

The portal 506 receives requests from the clients 502 and generates information views (iViews) 510, such as web pages, in response. In embodiments, the portal 506 implements a user roles-based system to personalize a common interface and the iViews 510 for a user of one of the clients 502. The user can have one or more associated roles that allow personalized tailoring of a presented interface through the iViews 510.

The portal 506 communicates with an enterprise management system 512 that consolidates multiple application services.

The portal 506 receives data 514 from the system 512 to fulfill the requests of the clients 502. The system 512 provides integrated application services to manage business objects and processes in a business enterprise. The business objects and processes include resources such as personnel, development projects, business programs, inventories, clients, accounts, business products, business services and so forth.

The system 512 communicates with enterprise base systems 516 to obtain multiple types of enterprise base system data 518. The base systems 516 include application services, such as human resource management systems, customer relationship management services, financial management systems, project management systems, knowledge management systems, business warehouse systems, time management systems, electronic file systems and mail systems. In embodiments, the enterprise base systems 516 include a single integration tool, such as eXchange from SAP AG of Germany, which provides an additional level of integration among the enterprise base systems 516. The enterprise management system 512 consolidates and integrates data and functionality of the enterprise base systems 516 into the single management tool.

The single management tool includes systems and methods to facilitate generation of new applications within the enterprise management system 512. The new applications, generally referred to as cross-functional or composite applications, draw on resources of the enterprise base systems 516 to cross over traditional application boundaries and handle new business scenarios in a flexible and dynamic manner.

A virtual business cycle can be generated using such composite applications, where executive level business strategy can feed management level operational planning, which in turn can feed employee level execution, which can feed management level evaluation, which can feed executive level enterprise strategy. Information generated in each of these stages in an enterprise management cycle can be consolidated and presented by the enterprise management system 512 using the customized cross-functional applications. The stages provide and consume determined services that are integrated across multiple disparate platforms.

The portal 506, enterprise management system 512 and enterprise base systems 516 can reside on one or more programmable machines, which communicate over the network 504 or one or more communication busses. In embodiments, the base systems 516 reside in multiple servers connected to the network 504, and the portal 506 and enterprise management system 512 reside in a server connected to a public network (not shown). Thus, the architecture 500 can include customized, web-based, cross-functional applications, and a user can access and manage enterprise programs and resources using these customized web-based, cross-functional applications from anywhere that access to the public network is available.

A user interface (UI) provides UI patterns used to link new objects and workflow together and generate standardized views into results generated by one or more cross-functional applications.

An object modeling tool enables generation of new business objects in a persistency/repository layer by providing a mechanism to extend a data object model dynamically according to the needs of an enterprise.

A process modeling tool enables generation of new business workflow and ad hoc collaborative workflow. The process modeling tool includes procedure templates with pre-configured work procedures that reflect best practices of achieving a work objective. A work procedure can include contributions from several individuals, generation of multiple deliverables, and milestones/phases. Whenever an instantiated business object or work procedure has a lifetime and status, a progress and status of the object or work procedure is trackable by a process owner or by involved contributors using a "dashboard" that displays highly aggregated data. The dashboard and a "myOngoingWork place" can be two UI patterns that are provided by the UI components 508.

Whenever there is a concept of "myObjects," "myRecentObjects," "myRelatedObjects" or "myPreferredObjects," then an object picker UI pattern, provided by the UI components 508, is included that lets users pick their favorite object directly. Whenever people are to be searched, either for choosing one individual person or for generating a collection of people meeting some criterion, a "People Finder" concept can be applied. A key aspect of searching for a person is described as an attribute within the user's activity, qualification, interest, and collaboration profile. For a given cross-functional application, people collections can be stored as personal or shared collections using the People Finder to make them available for further operations later on.

Whenever there is a strategic view on a cross-functional application scenario, analytics of the overall portfolio can be made available in the form of a collection of the UI components 508. A view selector is used to display/hide components, and a component can be toggled between graphical and numerical display and include a drop-down list or menu to select sub-categories or different views.

Cross-functional application scenarios provide related information to the user when possible, and some parts within a larger cross-functional application define what kind of related information is to be offered. Heuristics can be used to identify such relatedness, such as follows: (1) information that is related to the user due to explicit collaborative relationships, such as team/project membership or community membership; (2) information that is similar to a given business object in a semantic space based on text retrieval and extraction techniques; (3) recent objects/procedures of a user; (4) other people doing the same or similar activity (using the same object or procedure template, having the same work set); (5) instances of the same object class; (6) next abstract or next detailed class; (7) explicit relationships on the organizational or project structure; (8) proximity on the time scale; (9) information about the underlying business context; and/or (10) information about the people involved in a collaborative process.

Cross-functional applications also can include generic functionality in the form of "Control Center Pages" that represent generic personal resources for each user. These cross-functional applications can refer to the following pages, where appropriate: (1) A "MyOngoingWork" page that provides instant access to all dashboards that let users track their ongoing work. Ongoing work refers to the state of business objects as well as guided procedures. (2) A "MyDay" page that lists today's time based events that are assigned or related to the user. (3) "My MessageCenter" page that displays all pushed messages and work triggers using a universal inbox paradigm with user selected categorical filters. (4) "MyInfo" that provides access to all personal information collections (documents, business objects, contacts) including those located in shared folders of teams and communities of which the user is a member. MyInfo can also provide targeted search in collaborative information spaces such as team rooms, department home pages, project resource pages, community sites, and/or personal guru pages.

The object modeling tool, process modeling tool and user interfaces are used to build components of cross-functional applications to implement new enterprise management functions without requiring detail coding development by a system architect or programmer.

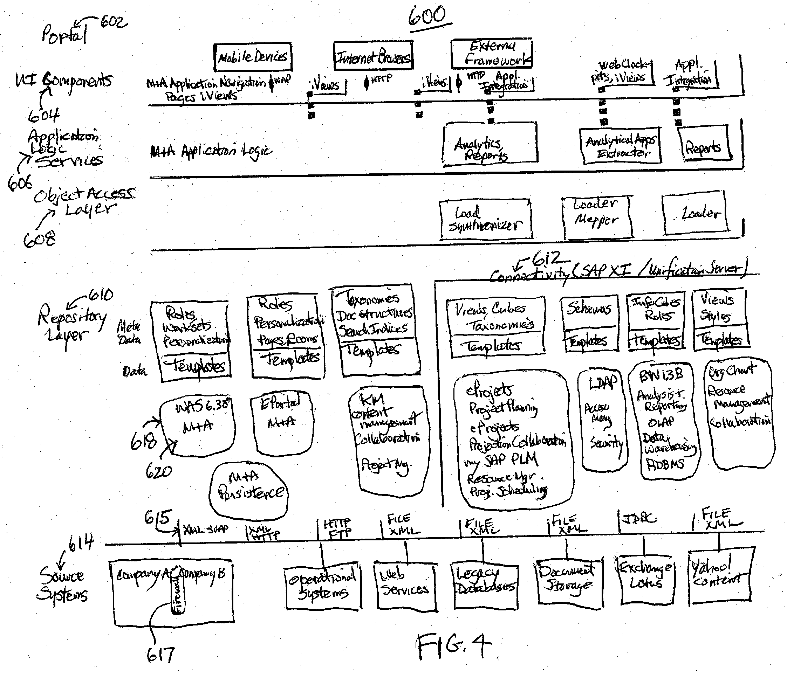

As shown in FIG. 4, a platform 600 that supports the architecture 500 includes a portal 602, user interface (UI) components 604 and application services logic 606. The platform 600 includes an object access layer 608, a persistence/repository layer 610, connectivity layer 612, and source systems 614. In embodiments, the architecture includes software and components from SAP AG of Germany, as well as special corporate restructuring modules.

Graphical user interfaces (GUIs) provide interaction between a user and the UI components 604 through the portal 602. The UI components 604 interact with the application services logic 606. The application services logic 606 interact with databases and repositories in the persistence/repository layer 610. The user requests information via a GUI through the portal 602. The application services logic 606 processes the user request, retrieves the appropriate requested information from the databases and repositories in the persistence/repository layer 610, and sends the requested information to GUI for display to the user.

The databases and repositories in the persistence/repository layer 610 can contain metadata. Metadata refers to data that describes other data, such as data pertaining to roles, work sets and personalization information, for example. The metadata can interact with the object access layer 608, connectivity layer 612 and application services logic 606. The metadata can also interact with templates 616. The templates 616 provide a format or organization of information according to preset conditions. The templates 616 can interface with Web application server (WAS) processes 618 and core merger processes 620 in the repository layer 610.

In embodiments, the databases and repositories in the persistence/repository layer 610 interact with the source systems 614 through base system connectors 615 using a markup language such as extensible markup language (XML), web services such as Simple Object Access Protocol (SOAP), request for comments (RPC), or Transmission Control Protocol/Internet Protocol (TCP/IP). The source systems of one organization can interact with the source systems of another organization through a firewall 617.

The base system connectors 615 can include an enterprise connector (BC) interface, Internet communication manager/Internet communications framework (ICM/ICF), an encapsulated postscript (EPS) interface and/or other interfaces that provide remote function call (RFC) capability.

The persistence/repository layer 610 provides the platform 600 with its own database and data object model. The database and data object model provides a consolidated knowledge base to support multiple enterprise functions, including functions generated as cross-applications. Active communication between the persistence/repository layer 610 and the base systems 516/614 provides a linkage between real time relational data from multiple base systems 516/614 and an integrated enterprise tool to permit strategic enterprise management and planning.

The data object model represents a subset of data objects managed by base systems 516/614. Not all of the data aspects tracked in the base systems 516/614 need to be recorded in the data object model. The data object model has defined relationships with data objects stored in the base systems 516/614. For example, certain data objects in the data object model have "read-only" or "write-only" relationships with data objects in the base systems 516/614. These types of defined relationships are enforced through a communication process between the persistence/ repository layer 610 and the base systems 516/614. The persistence/repository layer 610 decouples application development from the underlying base systems 516/614.

In embodiments, the source systems 516/614 interact with third party applications, such as Lotus software from IBM or data provided by other content providers, such as Yahoo!

As described above, the portal 602 provides a common interface to management services. The management services include a merger project management service and a merger integration project management service. The network 504 links the clients 502 to the portal 602 for exchange of information pertaining to a merger of two organization organizations or an acquisition involving two organizations.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

By way of example, an exemplary merger process is described herein. However, the methods and systems described herein apply generally to most corporate restructurings, such as spin-offs, department mergers and splits, and so forth.

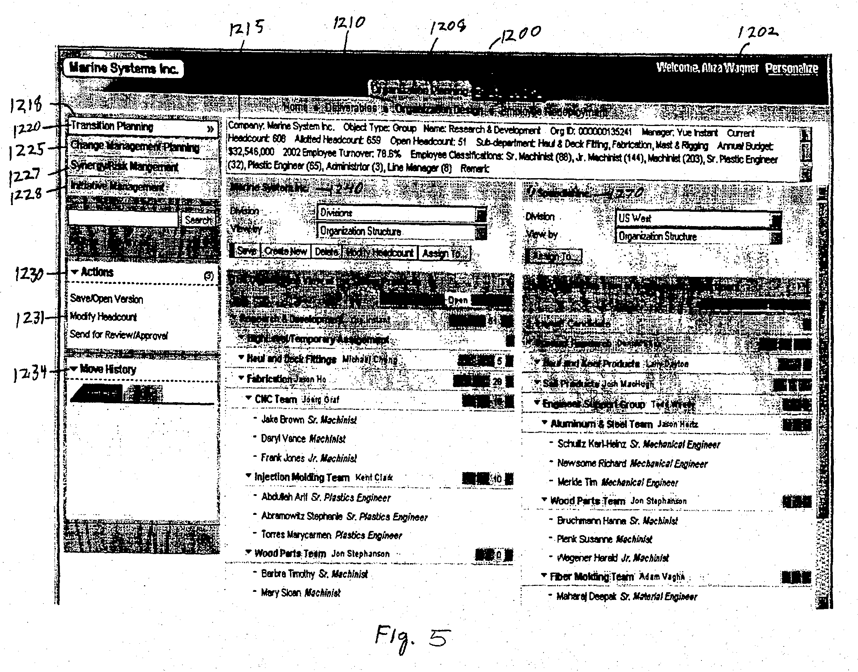

FIG. 5 illustrates an exemplary organizational design tool interface 1200. The interface 1200 is selected by a stakeholder 1202 from the organizational planning menu 1208. The interface 1200 includes a panel 1240 for an acquiring organization, such as Marine Systems Inc., and a panel 1270 for an acquired organization, such as Speedial Inc. The organizational design interface 1200 is used for stakeholder members involved with strategic organizational design and transition planning. Interface 200 facilitates the management of organizational design in the post-closing 1106.

A "fact sheet" panel 1215 displays organizational information, such as a financial statement, an organizational historical or background statement, investor information, and answers to frequently asked questions (FAQs). The "fact sheet" panel 1215 also displays one or more details for a particular stakeholder group, employee headcount, headcount types, previous headcount transitions, and predicted headcount transitions.

Another panel 1218 in the interface 1200 permits the stakeholder 1202 to navigate among a display of various interface views, such as a transition planning view 1220, a change management planning view 1225, a synergy/risk management view 1227, and an initiative management view 1228. The stakeholder 1202 can enter a search query 1229, and perform other actions 1230 related to organizational planning 1208, such as modifying headcount 1231. Additionally, the panel 1218 allows the stakeholder to access a history 1234 of other stakeholder and group movements during a merger.

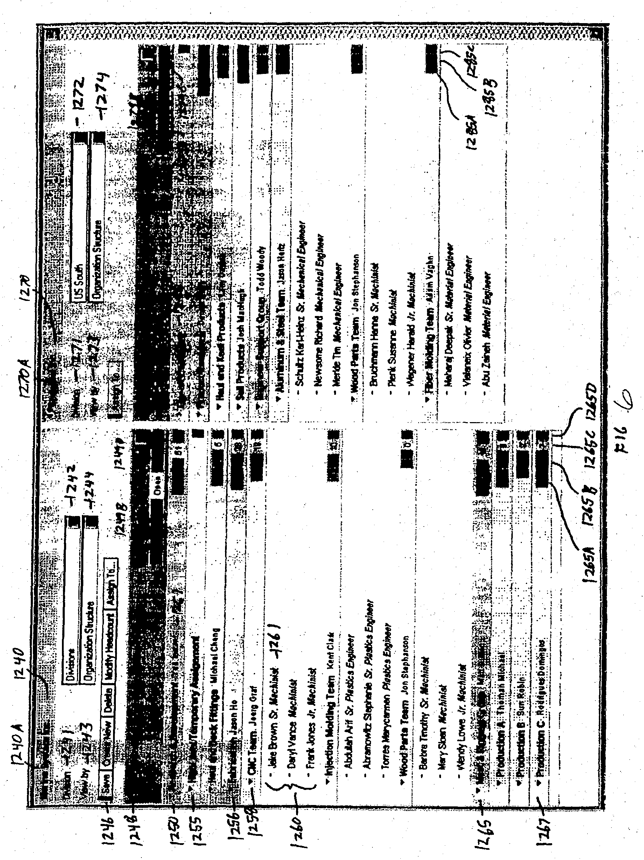

FIG. 6 illustrates a panel 1240 for the acquiring organization, and a panel 1270 for an acquired organization. The panels 1240 and 1270 enhance organizational design efforts when planning new headcounts, shifting headcounts, or tracking transition changes. Additionally, the panels 1240 and 1270 assist in employee reassignments by searching and matching resources, and tracking the status of employee movements. Since other organizational planning stakeholders can view and edit the interface 1200 and the panels 1240 and 1270, collaborative employee assignment and management of redeployments are supported.

The panel 1240 presents a view 1248 of the acquiring organization 1240A. A stakeholder 1202 can elect a division 1241 of the organization 1240A with a selector 1242. The selector 1242 can open a pull-down menu of options such as divisions, offices, function or status. The stakeholder 1202 also can select a view 1243 with another selector 1244. The selector 1244 opens a pull-down menu of viewable options such as organizational structure, job function, and grade. Furthermore, the panel 1240 presents other options 1246 to the stakeholder 1202 including saving a profile, generating a new profile, deleting a profile, modifying organizational headcount, or making an assignment to another stakeholder of one or more organizations.

The organizational view 1248 of the Sailing Products displays a hierarchy of departments such as research and development 1250 and fabrication 1256. The panel 1240 identifies a lead stakeholder 1251 of each department, and a group 1260 of stakeholders, including an organizational title 1261 for each stakeholder group member. The status of a number 1249 of positions are displayed for each division, group or subgroup. For example, the Production C subgroup 1267 in the Mast and Rigging Group 1265 presents a number 1265A of allotted positions 1249A, a number 1265B of current positions 1249B, a number 1265C of open positions 1249C, and a number 1265D of requested positions 1249D. The panel 1240 shows the status of transitional stakeholders or stakeholders with temporary assignments 1255.

Panel 1270 presents an organizational view 1278 of a research department of an acquired organization 1270A, Speedial Inc. In panel 1270, a stakeholder 1202 can elect a division 1271 of the organization 1270A with a selector 1272. However, the selector 1272 can open a different pull-down menu than the selector 1242 of panel 1240. For instance, the selector 1272 can open a pull-down menu of options displaying regional organizational divisions such as US South, US East, US West, and US Central.

As in panel 1240, panel 1270 presents information to display the status of a number of positions for each stakeholder division or group. For instance, panel 1270 shows that the Fiber Molding Team 1290 has a number 1285A of current positions 1279A, a number 1285B of assigned positions 1279B, and a number 1285C of undetermined positions 1279C. The panel 1270 may even display layoff candidates 1280.

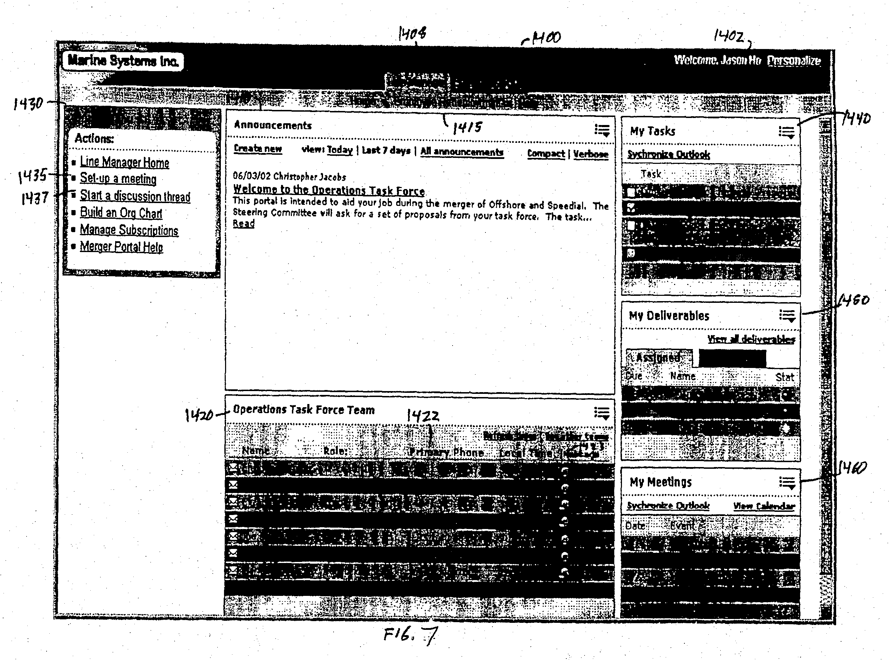

FIG. 7 illustrates an exemplary tool interface 1400 for a stakeholder 1402 (e.g., a line manager). The interface 1400 can be personalized 1402 for the stakeholder 1402 and greet the stakeholder 1402 with an announcement panel 1410. The stakeholder 1402 can view a panel 1420 of the operations task force team, along with the contact information 1422 and availability 1423 of team members.

The interface 1400 allows the stakeholder 1400 to collaborate with other stakeholders to conduct organizational design tasks such as arranging a meeting 1435 or starting a discussion thread 1437 with panel 1430. The interface 1400 has personalized panels for tasks 1440, deliverables 1450, and meetings 1460. Each panel 1440, 1450, 1460 can have selectable hypertext link functions.

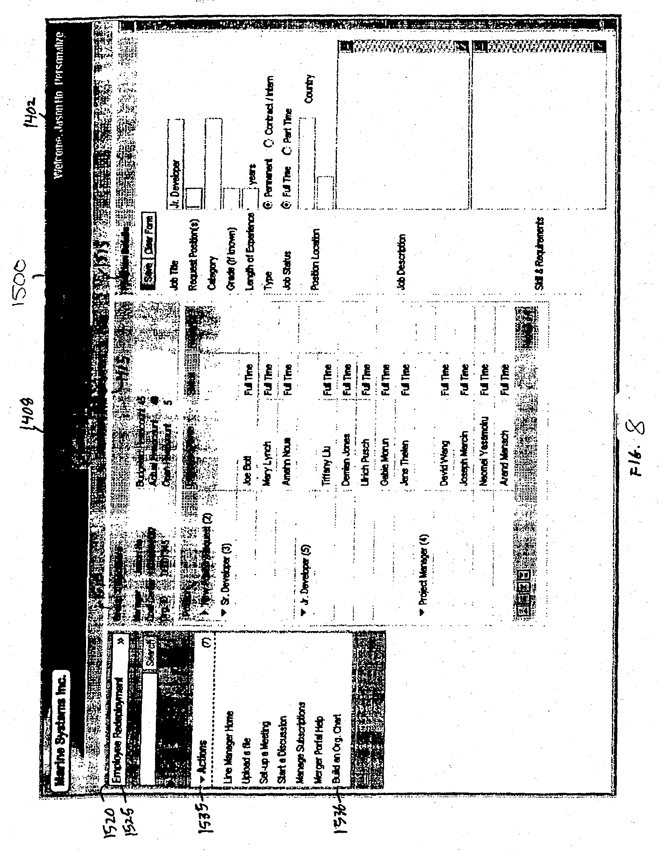

FIG. 8 illustrates an employee redeployment interface 1500 for the stakeholder 1402. For this interface 1500, an employee redeployment indicator 1415 is selected. The interface 1500 shows a panel 1510 for a group of stakeholders, a panel 1515 for positional details, and a panel 1520 with other navigational abilities for the stakeholder 1402. In panel 1520, the stakeholder 1402 accesses an employee redeployment navigation indicator 1525, a search query interface 1530, and other stakeholder actions 1535, such as building an organizational chart.

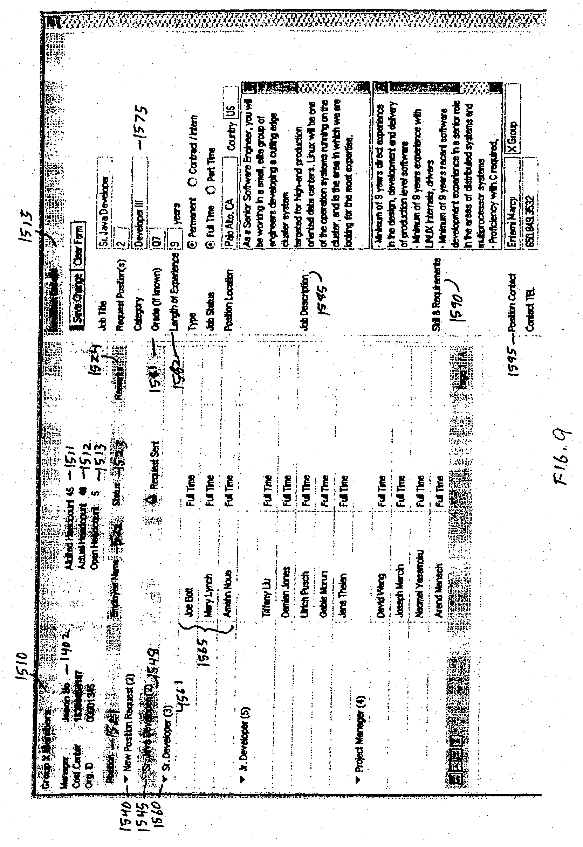

FIG. 9 presents panel 1510 and panel 1515 from interface 1500, in which panel 1515 has completed information fields, such as field 1575. In panel 1510, the stakeholder 1402 can examine an allotted headcount value 1511, an actual headcount value 1512, and a value 1513 of open headcounts. The stakeholder 1402 can inspect a status 1523 for organizational positions 1521 with accompanying descriptions and remarks 1524. The stakeholder can access the positions in an organization by the title 1560 of the position, and view a number 1561 of stakeholders 1565 listed under a particular position.

Panel 1510 presents new position requests 1540, and the types 1545 and numbers 1548 of the new position requests 1540. A position request type 1545 is detailed in panel 1515 with completed fields, such as a job description 1585, and skills and requirements 1590. A positional grade level 1581 and length of experience 1582 also may be displayed in panel 1515. The position detail panel 1515 can associate a position with a contact stakeholder 595.

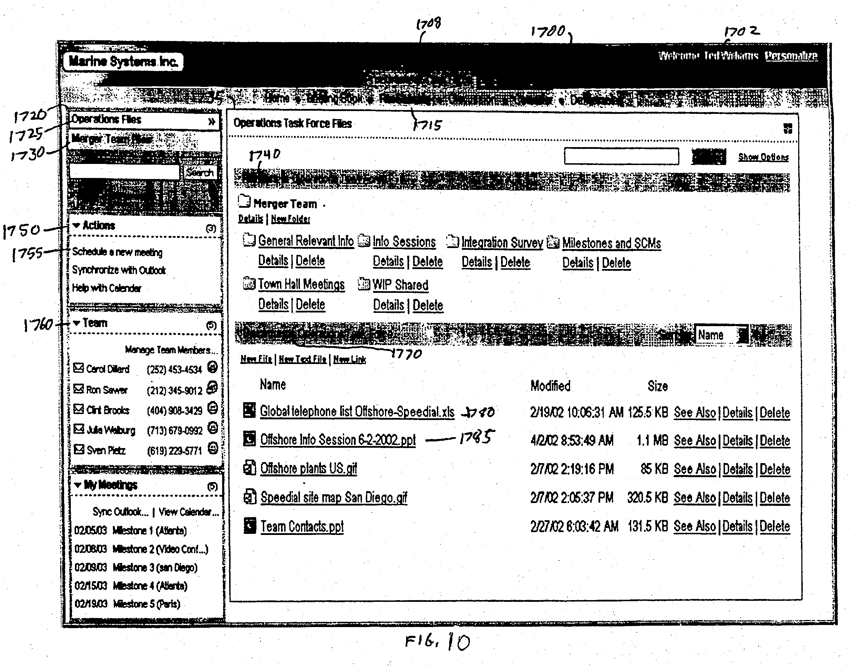

FIG. 10 illustrates an interface 1700 that allows stakeholders from various groups to collaborate and share information during the merger. In particular, the interface 1700 show stakeholder 1702 in the procurement task force. The procurement task force tab 1708 presents the stakeholder 1702 with a menu of views, including a view 1715 for sharing objects with other stakeholders in the procurement task force. The view 1715 presents a panel 1735 for the stakeholders in the procurement task force to share folders 1740 and documents 1770 with stakeholders in the operations task force.

The shared objects can be external objects. Examples of these externally-generated objects include an Excel spreadsheet 1780, or a PowerPoint presentation 1785.

The stakeholder 1702 in the procurement task force can also share objects with stakeholders in a merger team 1730. Additionally, the stakeholder 1702 can view and access other procurement task force team members 1760 and initiate merger actions 1750, such as scheduling a new meeting 1755.

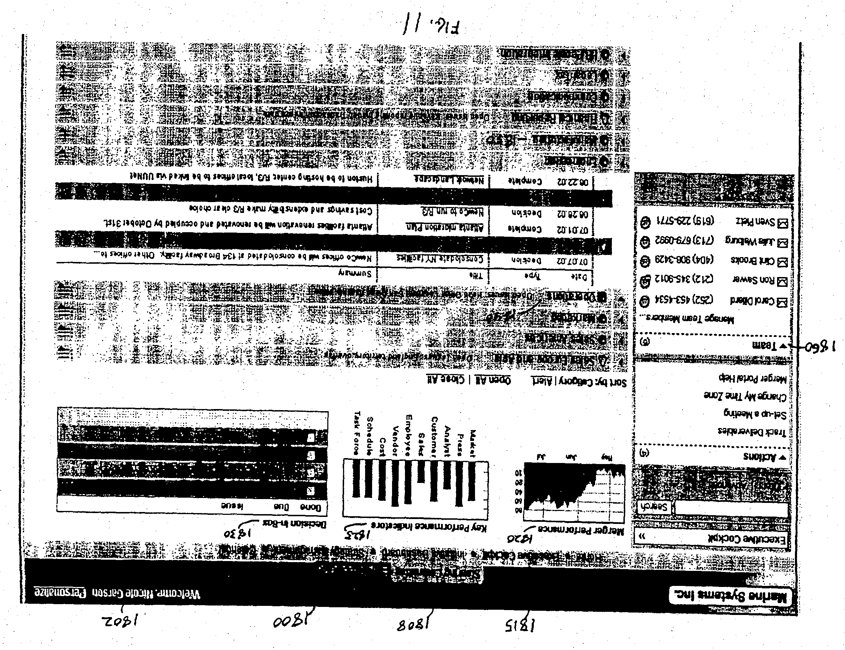

FIG. 11 illustrates a tool interface 1800 for a stakeholder 1802 in a merger steering committee. The steering committee can have an interface tab 1808 that presents a menu of views, including the presented view of an "executive cockpit" 1815. The executive cockpit 1815 is also referred to as a "Control Center" page or dashboard. The executive cockpit view 1815 allows executive board stakeholders 1145 to access, plan, and manage various aspects of the merger. Interface 1800 can chart the merger performance 1820 and present key performance indicators 1825. The interface 1800 presents merger issues in a decision box 1830. Merger issues can be presented by type or category. For example, the stakeholder 1802 can view issues in a manufacturing division 1850 or in an operations department 1840. The interface 1800 also allows the stakeholder 1802 to contact and manage other stakeholders 1860.

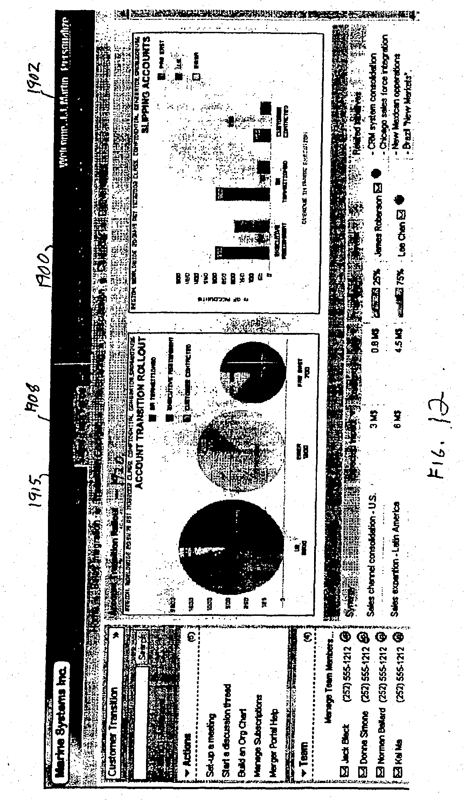

A tool or module can be included to identify and track supplier 1185 and customer 1175 stakeholders during the merger process. FIG. 12 shows an example of a tool interface 1900 for a stakeholder 1902 with access to a sales task force menu 1908. Other possible views for stakeholders in the sales task force interface 1900 include views for sales integration, file sharing, discussions, deliverables, and a calendar. The view presented in interface 1900 is a transition cockpit view 1915. The view 1915 allows the stakeholder 1902 to access and manage sales-related transition tools for the merger, including an account transition rollout 1920, and sales synergy tracking 1930.

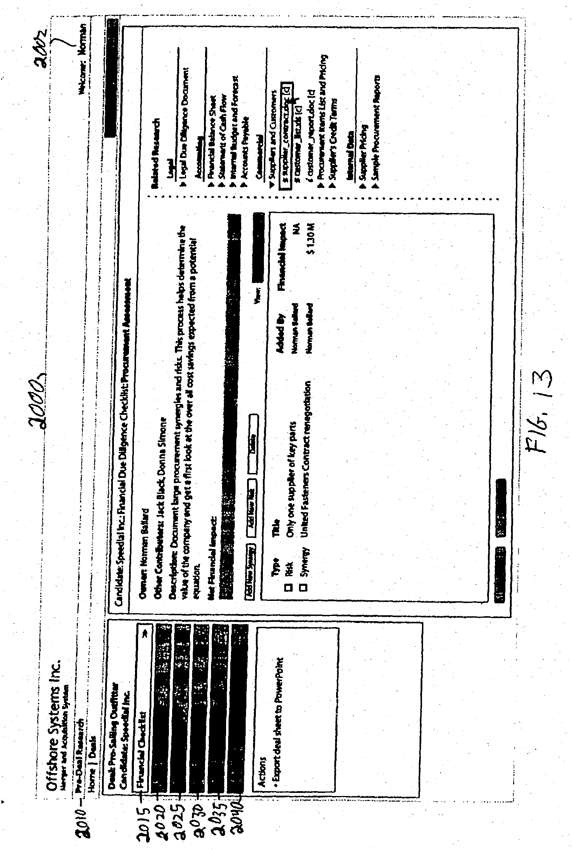

FIG. 13 shows a tool interface 2000 to allow a stakeholder 2002 to access, plan, and manage pre-deal research 2010. The stakeholder 2002 accesses views in a financial checklist 2015, an operations checklist 2020, a profile of a targeted merger candidate 2025, and other research and reports 2030. The stakeholder 2002 schedules a meeting 2035 and view organizational synergies and risk summaries 2040.

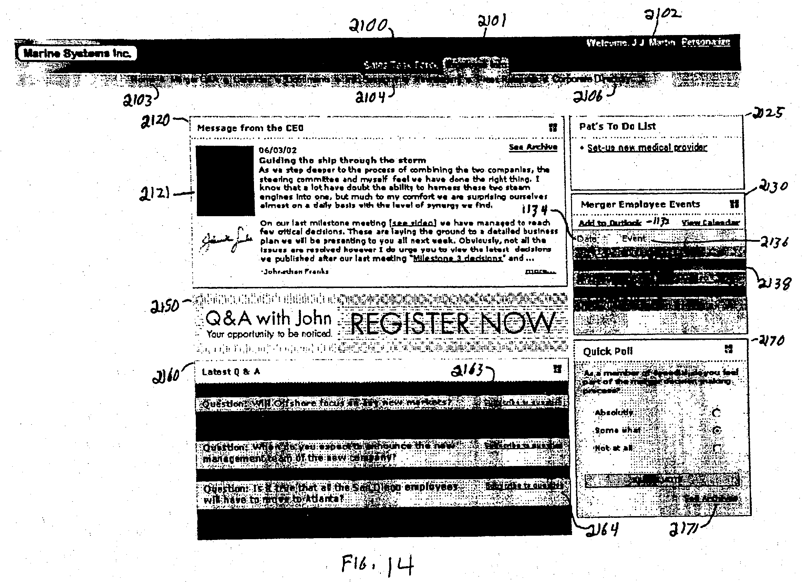

FIG. 14 illustrates an employee information interface 1400. An executive stakeholder of an organization, such as a chief executive officer (CEO) 2121, can update employee stakeholders on the progress of the merger, as illustrated in panel 2120. The employee stakeholder 2102 can also interact with the CEO 2121 with panels 2150 and 2160. Panel 2160 presents a question and answer (Q&A) session that allows employee stakeholders to submit questions or statements to the CEO 2121. The CEO 2121 communicates with the employee stakeholder 2102, and other employee stakeholders can view the communications and join the interactive discussion 2164. Such interaction allows a merger organization to retain employee stakeholders, and reduces the amount of misinformation that arises during a merger.

Panel 2125 allows the stakeholder 2102 to have a personalized merger task list. Panel 2170 allows employee stakeholders to submit and view interactive polls or questionnaires. Employee stakeholders also view previous polls 2171 and Q&A sessions 2163 that have been archived.

Panel 2130 keeps employee stakeholders informed of merger-related events. For example, panel 2130 displays the date 2134 and type of event 2136 related to a merger, such as a CEO breakfast event 2138 in Atlanta. The employee stakeholder 2102 selects the event link of 2138 and can be presented with a page (not shown) of information related to the breakfast. The employee stakeholder can add the event to an external calendar program, such as the calendar program in Outlook® from Microsoft Corporation. The employee stakeholder 2102 can access other merger interfaces, such as a corporate directory 2106, an informational session 2104, or a personalized home page 2103.

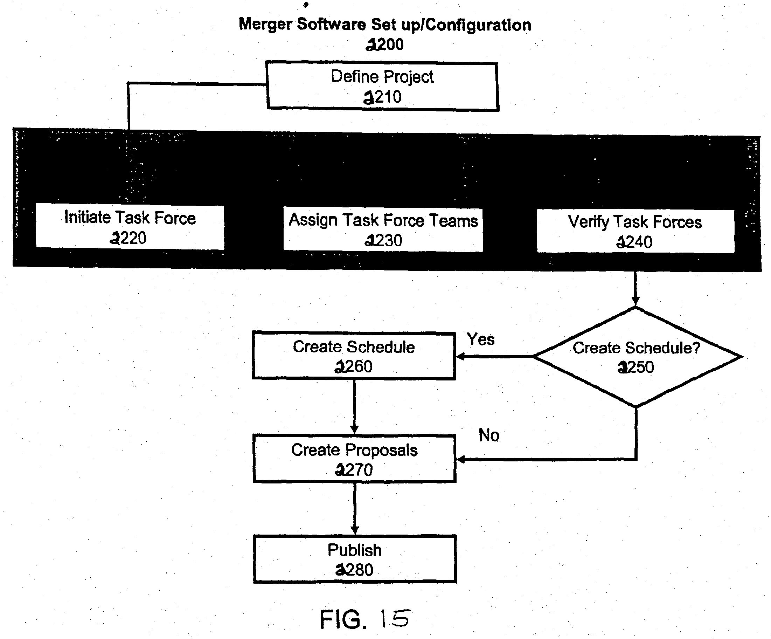

FIG. 15 depicts a flowchart 2200 of an exemplary stakeholder set up.

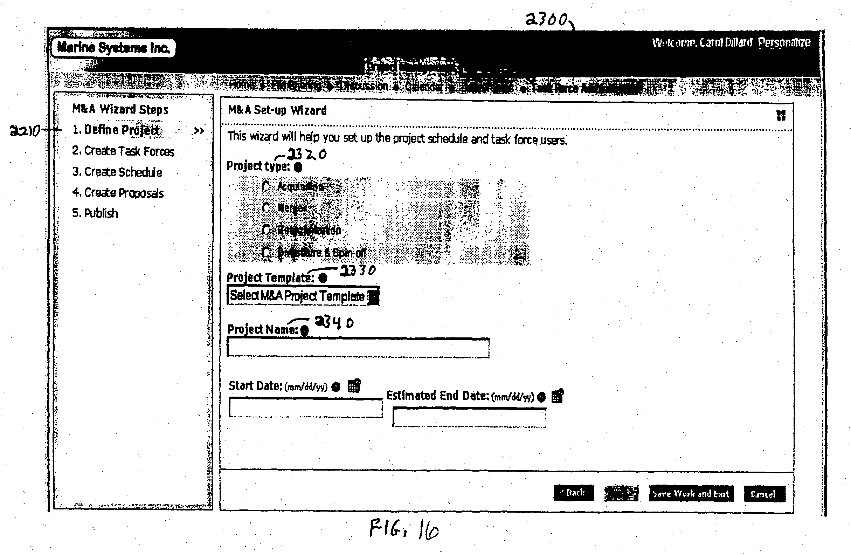

The user is allowed to define the project 2210, as illustrated in FIG. 16. The interface 2300 in FIG. 16 defines a project by type 2320 or a predefined project template 2330. Additionally, a project name 2340 can be entered in the interface 2300.

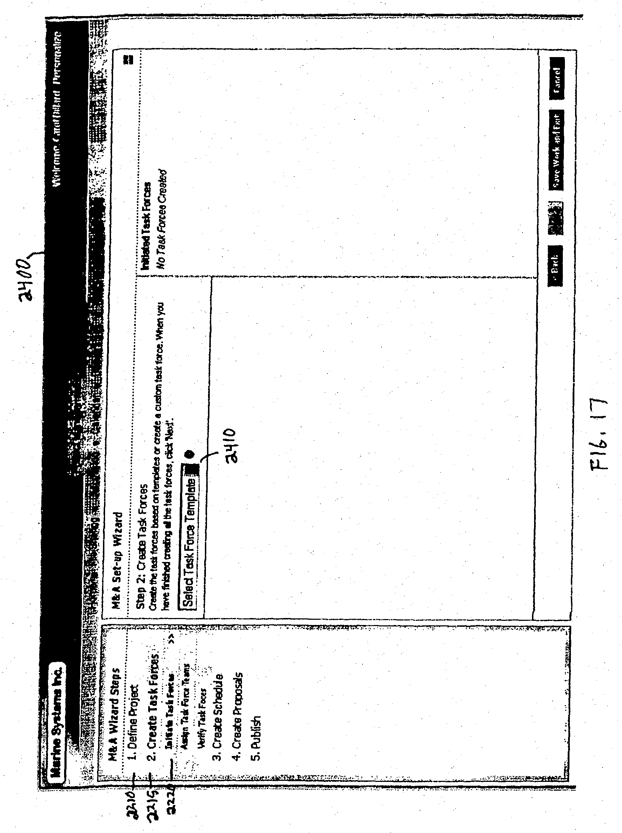

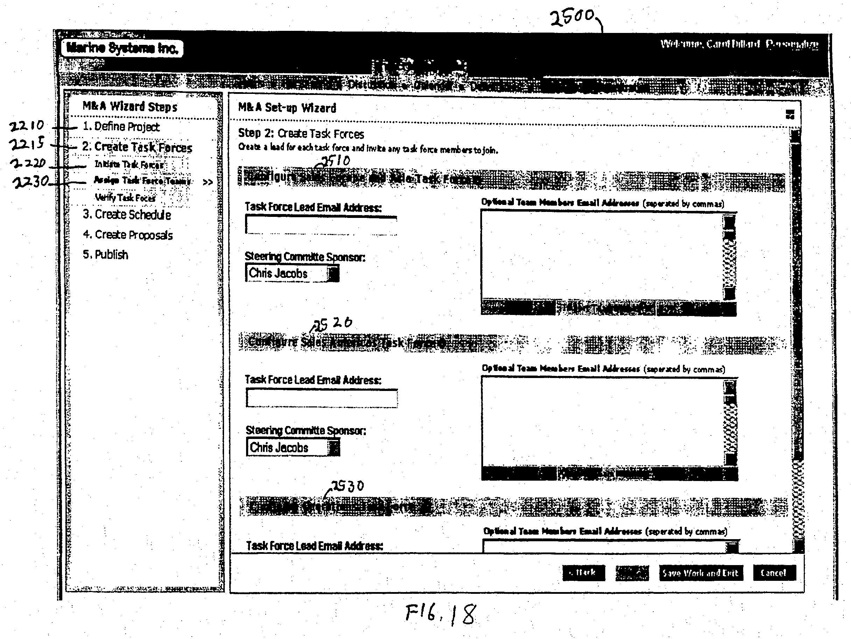

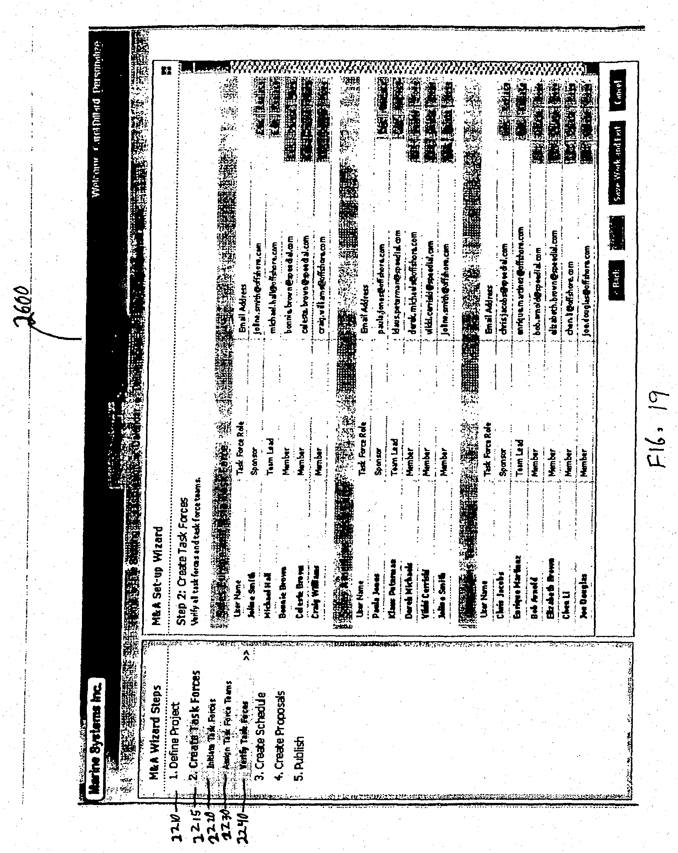

The user is allowed to generate, add and edit merger task forces 2215. A task force can be initiated 2220 with a template, as shown 2410 in FIG. 17. The tool 2200 allows the user to assign stakeholders to task force teams 2230. As illustrated in FIG. 18, stakeholders can be assigned to one or more sales teams 2510 and 2520. Moreover, other task force teams, such as the operations task force 2530, can be arranged or configured in the user interface 2500. After the members of the task force teams have been assigned, the task force team assignments can be verified 2240. FIG. 19 illustrates an interface 2600 to verify task forces.

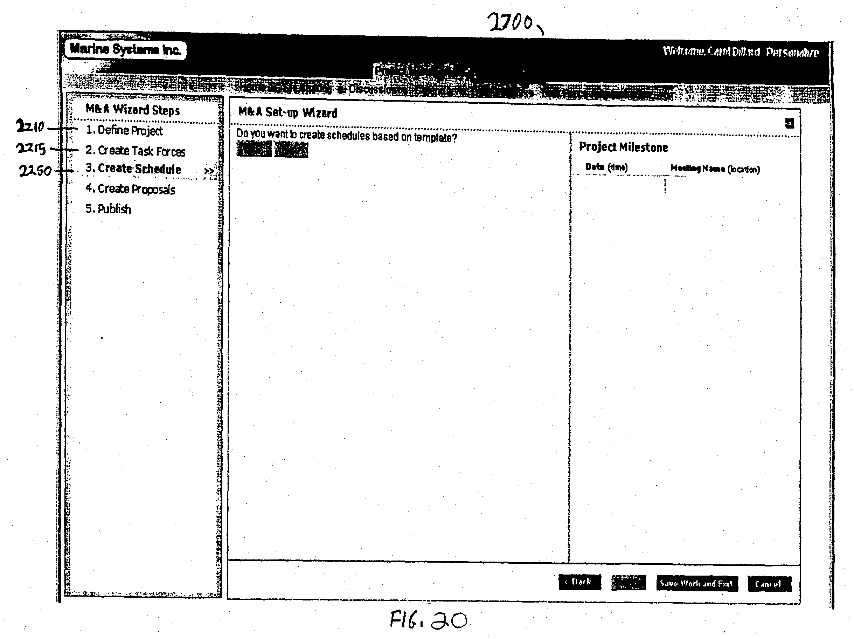

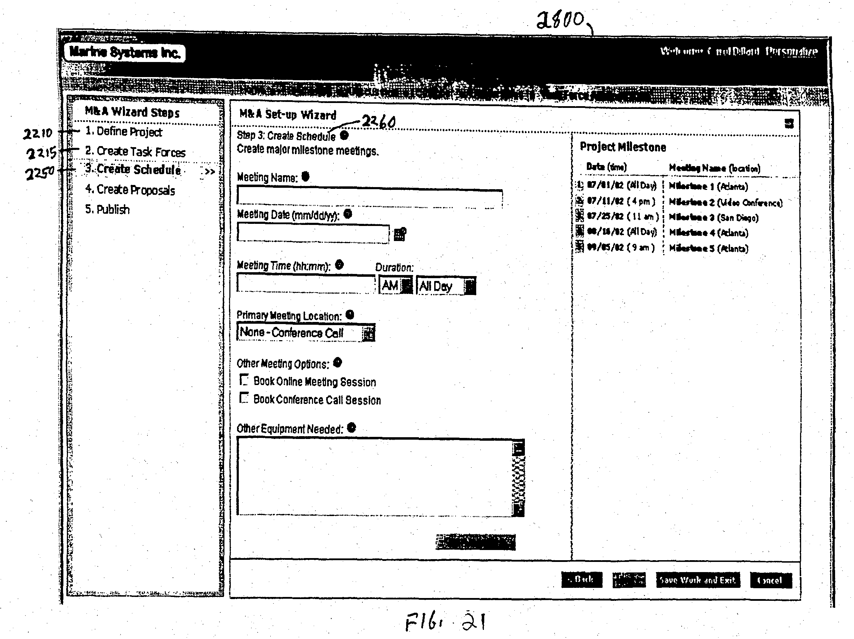

A user can generate a schedule 2250 as shown in interface 2700 in FIG. 20. A generated schedule is illustrated in interface 2800 in FIG. 21. If the schedule is not generated, then proposals 2270 can be created. Otherwise, if a schedule is generated as shown in 2800, then proposals are created for the next configuration block 2270.

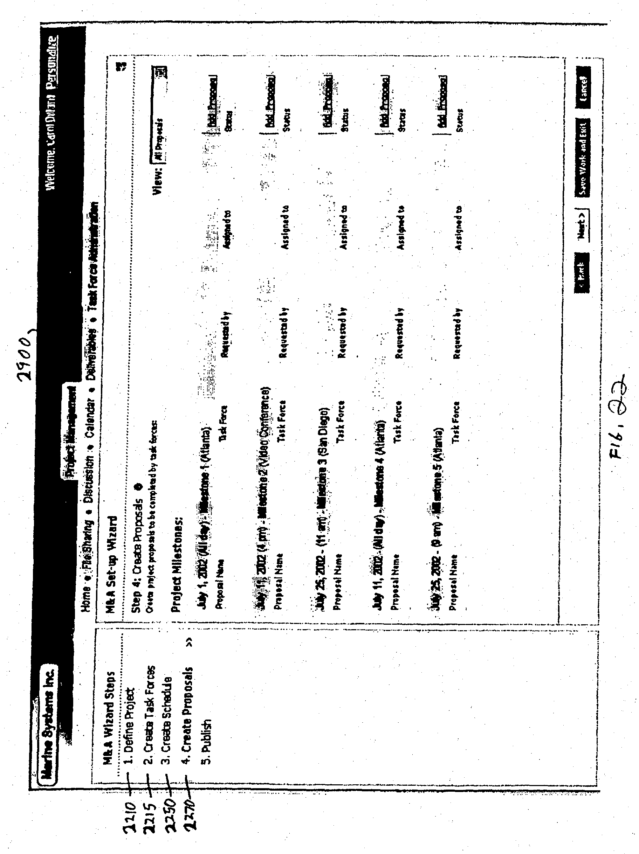

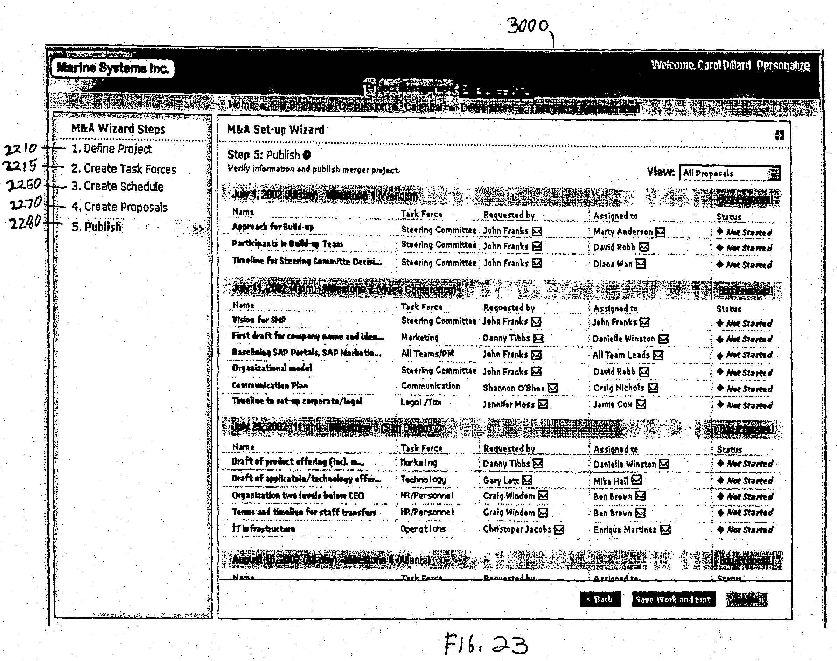

An exemplary proposal interface 2900 is shown in FIG. 22. After one or more proposals are generated, then the merger project information can be published 2280 as illustrated in interface 3000 in FIG. 23.

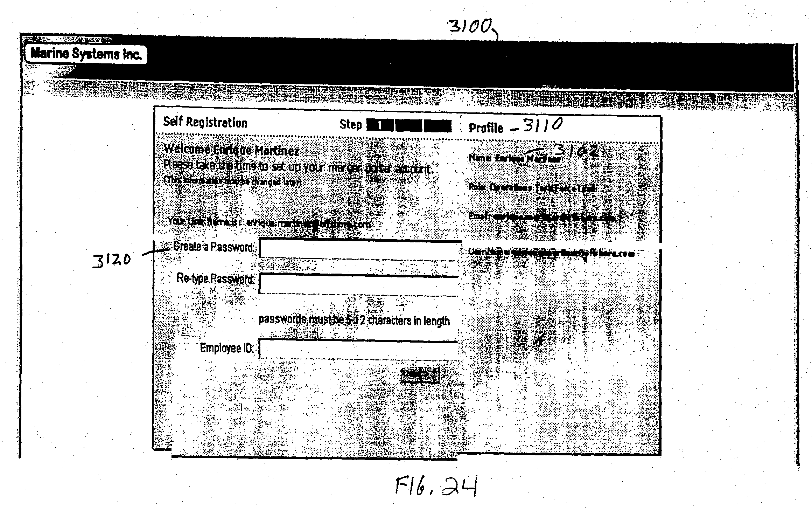

FIG. 24 illustrates an interface 3100 that allows a stakeholder 3102 to self register and create a profile 3110. The interface can require a password 3120 from the stakeholder 3102.

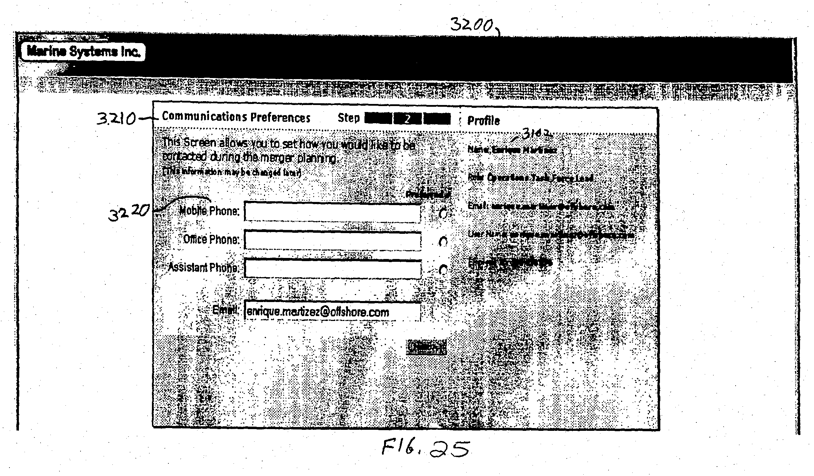

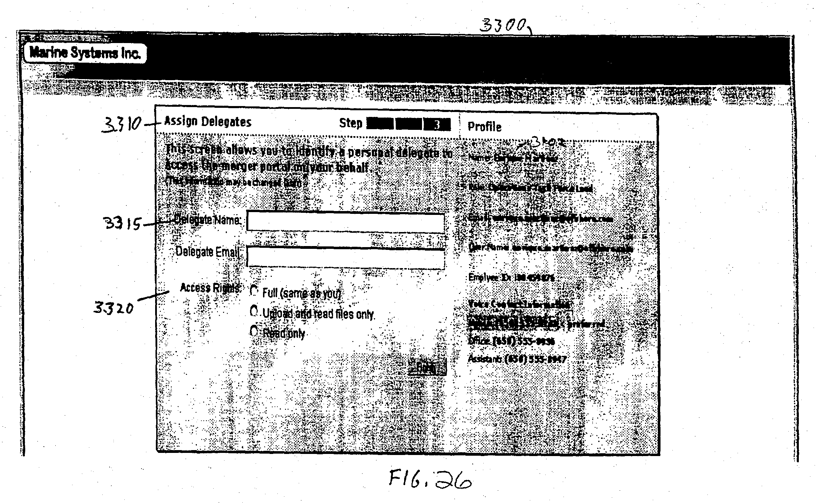

After the stakeholder 3102 initiates a profile in interface 3100, communication preferences 3210 from the stakeholder 3102, as shown in interface 3200 FIG. 25. In FIG. 26, an interface 3300 prompts the stakeholder 3102 user to identify a personal delegate 3315 to access the merger portal on behalf of the stakeholder 3102. The delegate 3315 can have full or partial access rights 3320 to the portal for the stakeholder 3102.

In an aspect, the invention features a method of facilitating an enterprise change including treating two or more information systems as a single logical information system to execute pre-change due diligence and post-change integration of the enterprise change, the enterprise change being at least one of a merger and acquisition, and providing a user interface to allow a user to conduct a merger activity.

In embodiments, the user interface can be adapted to allow a stakeholder plan and manage the merger activity, the user interface further adapted to allow a user to access one or more merger resources.

In another aspect, the invention features a method including providing a single logical physically distributed information system across one or more information systems of at least two enterprises that are being combined, and providing a user interface to access the single logical physically distributed information system, wherein the single logical physically distributed information system executes one or more pre-merger activities, merger activities, and post-merger activities.

In embodiments, the user interface can be adapted to at least one of a role of the user and a phase of the merger, wherein the user role can include an internal expert and an external expert of one of the enterprises, wherein the internal expert can include at least one of an executive, an employee, a manager, an investor, and an owner of one of the enterprises, wherein the external expert can include at least one of a consultant and an auditor. The role of the user further can include a stakeholder affected with one or more merger closing consequences, wherein the one or more merger activities can include an organizational restructuring, a personnel redeployment, a merger project management, a procurement management, a personnel retainment, and an integration of operational services.

In another aspect, the invention features a system for planning a restructuring of at least two organizations including an intranet interface adapted for at least one employee of one of the organizations, an extranet interface adapted for an external restructuring member of at least one of the organizations, and an information repository related to at least one of the organizations, the information repository being accessible by the intranet interface.

In embodiments, the extranet interface can include a password interface, wherein the system further can include a firewall between the intranet interface and extranet interface.

In another aspect, the invention features a system for implementing a restructuring of at least two organizations, wherein the system can include an object modeling tool, a repository, a template, and an interface for a user to edit information for one or more personnel of at least one of the organizations. In embodiments, the repository can include metadata.

In another aspect, the invention features a system for implementing a restructuring of at least two organizations, the system comprising a tool adapted to track one or more stakeholders, a module adapted to identify one or more stakeholders, and a tool interface adapted to allow a stakeholder to access, plan, and manage pre-deal research.

In embodiments, the system can include a user interface adapted to allow collaboration with the one or more stakeholders, the collaboration including an arrangement of a meeting and an initiation of a discussion thread.

In another aspect, the invention features a system for implementing a merger of at least two organizations, the system comprising a stakeholder interface, the stakeholder interface including a first panel adapted to allow a user to navigate among a user interfaces related to the merger, a second panel displaying one or more members of one or more groups of the organizations, and a search query interface adapted to allow a user to search for information related to the merger.

In embodiments, the system can include a menu adapted to receive a user selection, wherein the stakeholder interface can be adapted to allow an interactive discussion among merger members. The stakeholder interface further can include a menu for disparate interfaces, the disparate interfaces including a communication interface, an information sessions interface, and an organizational directory, the stakeholder interface further including a personalized merger task interface, a merger event interface, and an interface to a calendar.

The system can include one or more tools presenting a stakeholder with at least any one of a personalized object, a preferred object, a recently accessed object, and a merger-related object.
In another aspect, the invention features a system including a layer of merger application logic services for the merger of at least two organizations, information repositories for the merger, and user interfaces adapted to retrieve information from the information repositories, the user interfaces adapted to interact with the layer of merger application logic services.

In another aspect, the invention features a system for planning a merger of at least two organizations including an intranet template adapted for at least one stakeholder of at least one of the organizations.

In embodiments, the intranet template can include a reference model, the reference model including objects, folders, security settings, and reports.
In another aspect, the invention features a system adapted to execute management actions for a merger of at least two organizations, the system including a user-selectable portfolio of organizational information for planning, reporting, and analyzing merger information on a graphical user interface.

In embodiments, the system can include a definition tool, wherein the definition tool can be an integrated system tool.

In another aspect, the invention features a computer system adapted to execute actions for a merger of at least two organizations, the actions comprising: registering a stakeholder of the merger; and initiating a profile for the stakeholder.

In embodiments, the actions can further comprise allowing a personal delegate to access a merger interface on behalf of the stakeholder, wherein the registering a stakeholder of the merger comprises providing access to a user of a user interface, wherein the providing access comprises requesting a password from the user. In a further embodiment, the merger interface can be adapted to grant at least partial access rights to the personal delegate.

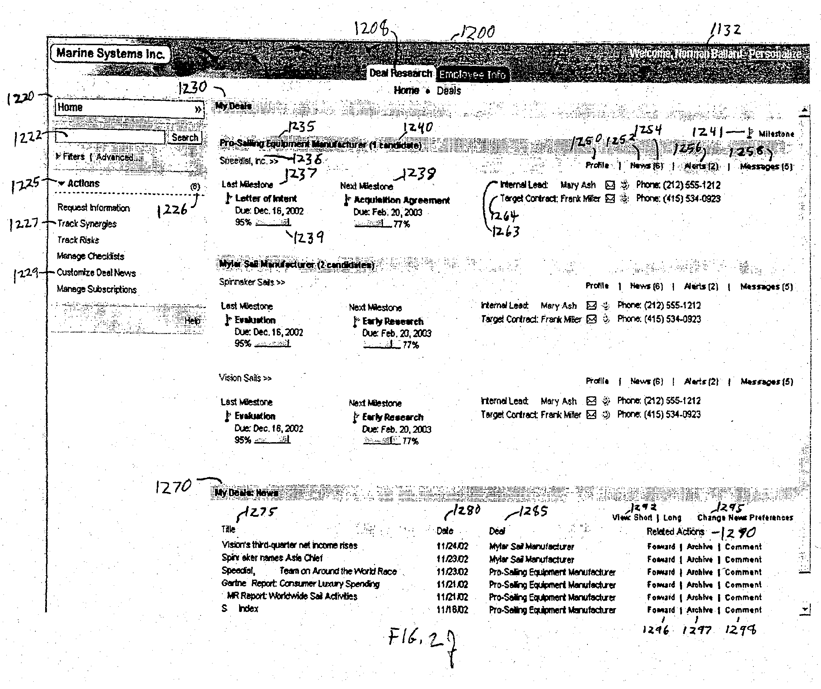

FIGS. 27-45 are exemplary user interfaces generally relating to synergy realization according to embodiments of the present invention.

FIG. 27 presents an exemplary interface 1200 for a user 1132 involved in deal management 125. The user 1132 accesses a personalized panel 1230 in a deal research menu 1208. The panel 1230 includes a deal topic 1235 and a number of deal candidates 1240 for the topic 1235. The interface 1200 includes an identifier (e.g., icon 1241) of merger milestones. The panel 1235 shows a prior milestone 1237 and the next milestone 1238 for an organization 1236. The panel 1235 shows how much of the milestone 1237 has been completed by a bar graph 1239, as well as contact persons 1263, 1264 for the milestones. Furthermore, the panel 1235 allows the user 1132 to access information for the organization 1236 via a profile link 1250, a news link 1252, a merger alert link 1256, and a message link 1258. A number 1254 of news items, messages, and alerts can also be shown.

Another panel 1270 in the interface 1200 shows news items 1270 that are related to merger deals. The panel 1270 presents a news title summary 1275 and a date 1280 of posting of the news item. The panel 1270 shows if a news item relates to a merger deal 1285 and allows the user 1132 to select related actions 1290, such as forwarding 1296, archiving 1297, and commenting 1298. The user 1132 can view a long or short summary 1292 of news title summaries 1274 and edit news preferences 1295.

Panel 1220 in the interface 1200 allows the user 1132 to search via a text box 1222 for people or topics and to perform a number 1226 of actions 1225. Some of the actions 1225 in the panel 1220 include tracking synergies 1227 and customizing deal news 1229.

As shown in FIG. 28, stakeholders 1319 conducting deal research 1208 for the merger collaborate on checklist items and financial objectives. FIG. 6 presents an interface 1300 for a financial checklist panel 1320. In this panel 1320, the user 1132 accesses one or more checklists 1340 of merger items. The checklists 1340 have items with deadlines 1345, owners 1350, and related actions 1355, such as generating a synergy item 1356. The checklists 1340 have a sub-checklist 1360 with items of different owners 1365 and 1370. The user 1132 can add a new checklist or a new checklist item 1330 and assign a checklist item 1335 to a new owner 1350. Moreover, the user 1132 can use a checkbox indicator 1361 to notify other stakeholders when the item has been completed or when the item is no longer relevant to the merger. Other indicators (e.g., icon 1375) provide additional status information to merger items.

The interface 1300 in FIG. 28 also has a panel 1308 to allow the user 1132 to change views in the interface 1300. In addition to accessing the financial checklist view 1320, stakeholders 1319 can access some other views, such as an operations checklist 1311, a candidate profile 1312, financial baselining 1314, meetings 1316, and a candidate summary 1318. The user 1132 can access other merger views (not shown) in the panel 1308, such as an overview of the deal, a due diligence checklist, a profile view of a deal, a view of related news items, and a view of deal-related research reports and meetings.

The panel 1308 presents contact information for a number 1321 of stakeholders of a merger team 1319. The panel 1308 presents information to easily allow the user 1132 to send email 1323, place a telephone call 1324, or send a real-time message 1326 to other merger members. The user 1132 is allowed to view other merger teams 1322 and access help or reference information 1327.

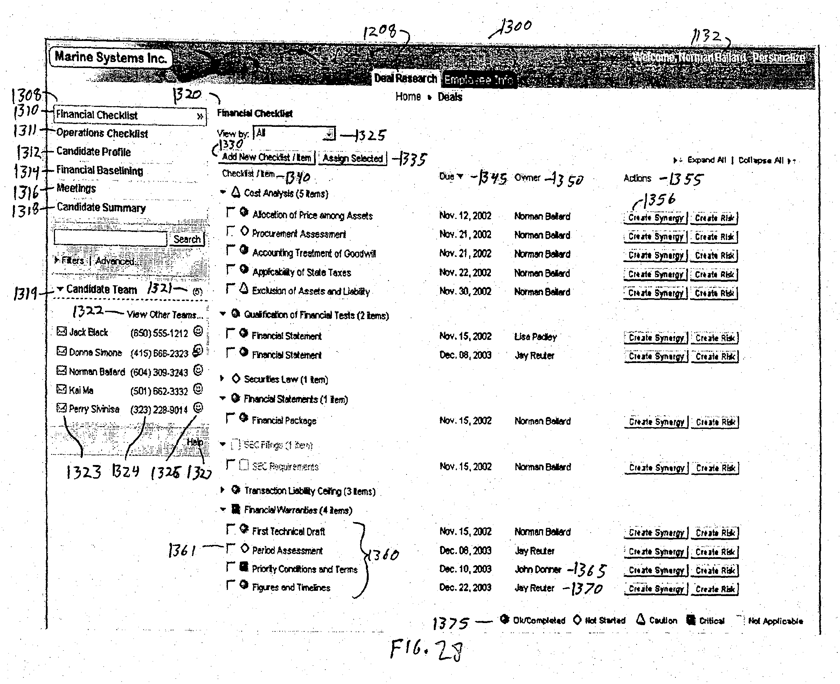

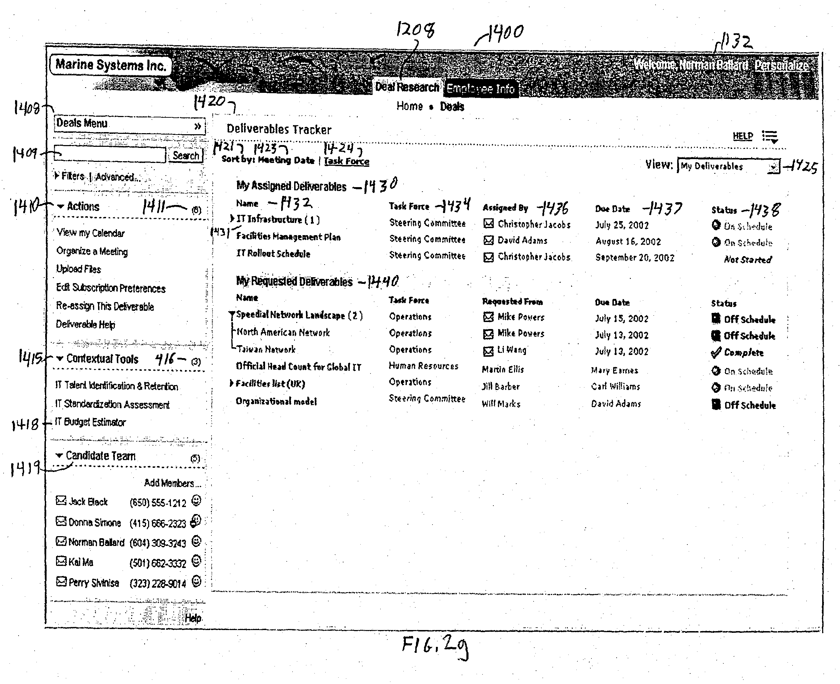

FIG. 29 illustrates another interface 1400 presenting deal research information. The interface 1400 presents a panel 1420 to track merger deliverables. The panel 1420 includes a personalized list of assigned deliverables 1430 and requested deliverables 1440. The deliverables can be sorted 1421 by dates 1423 or by merger groups 1424. The panel 1420 presents a deliverable item 1431 by title 1432, merger team 1434, owner 1436, date 1437, and status 1438. A selector 1425 allows the user 1132 to view deliverables of other merger members and merger teams.

FIG. 29 can include another panel 1408 that provides a number 1411 of other merger actions 1410 and search tools 1409 for merger members 1419. The panel 1408 also includes a number 1416 of information technology (IT) specific contextual tools 1415, such as an IT budget estimator. The panel 1408 allows a user access to one or more interfaces to allow a user to plan, address, manage, and execute merger-related information technology (IT) issues.

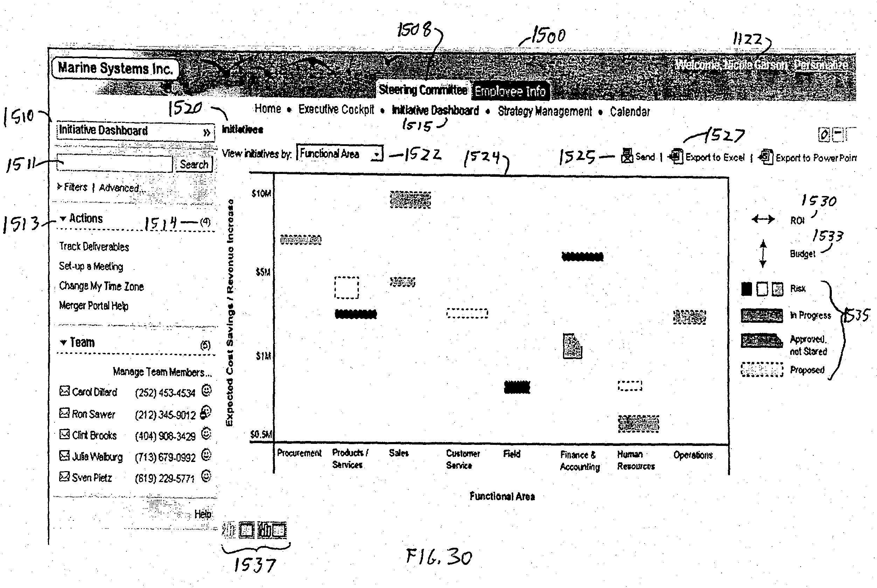

FIG. 30 illustrates an interface 1500 for an initiative dashboard 1515 in a steering committee menu 108. The initiative panel 1520 allows a user to view a graph 1524 of initiatives. A selector 1522 shows an initiative graph 1524 by functional area, cost savings, revenue increase, or other initiative options. The panel 1520 shows a graph legend 1535 with different types and statuses of merger information. The graph 1524 can also present merger financial information for a functional area, such as a return on investment 1530 or a budget 1533.

The user 1122 can send 1525 the initiative information, such as graph 1524, to other stakeholders or transfer the information to an external software object, such as an Excel spreadsheet 527 by Microsoft Corporation.

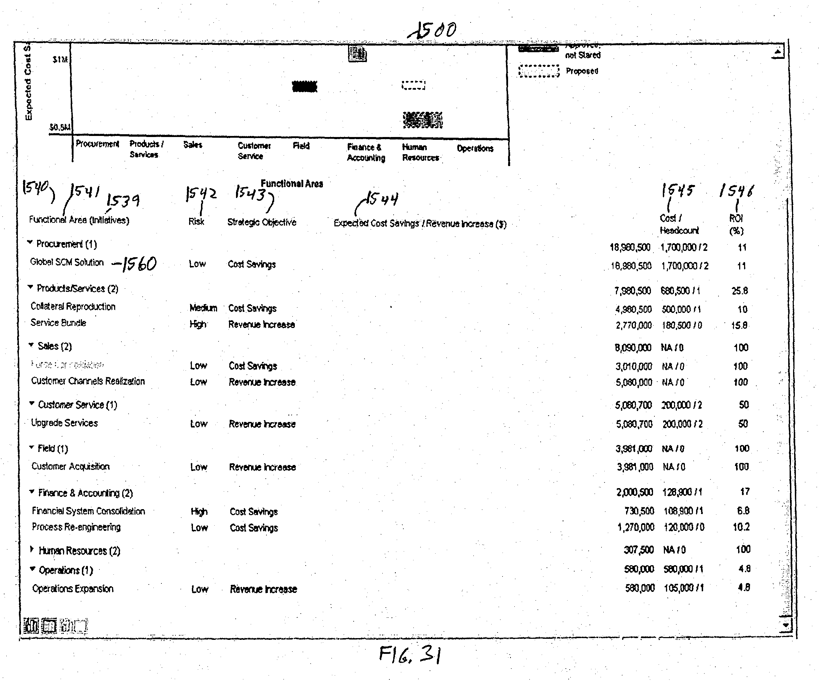

The interface 1500 allows a user to access a chart or graph 1524, a list, (shown in FIG. 31) or a graph and a list of initiative information via icons 1537. Furthermore, the interface 1500 has a panel 1510 with a text box 1511 to allow the user 1122 to search for items or people, as well as to perform a number 1514 of other actions 1513.

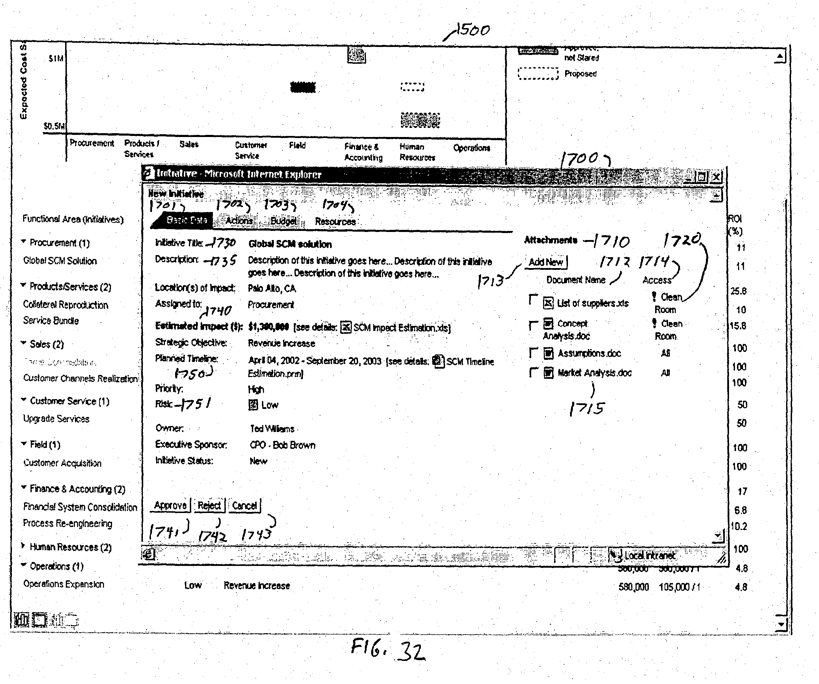

The interface 1500 includes a panel 1540 that presents information from the initiative graph 1524 in a list or table format. The panel 1540 presents a functional area 1541 for a number 1539 of initiatives. An initiative risk level 1542, a strategic objective 1543, and an expected cost savings 1544 can also be presented. Additionally, a return on investment 1546 and a cost per headcount 1545 is shown for listed initiatives. A user can select an initiative item 1560 to view another panel, as shown in panel 1700 (in FIG. 32).

The panel 1700 includes detailed initiative information. The panel 1700 presents tab menus of basic data 1701, actions 1702, budget 1703, and resources 1704. The initiative 1560 is presented with a heading 1730 and a detailed description 1735. Additionally, details of an estimated impact 1740 of the merger initiative 1730 are presented, including a planned timeline 1750 and a risk level 1751. After analyzing the initiative information 1701, the user 1122 can approve 1741, reject 1742, or cancel 1743 the initiative 1730.

The user 1122 can view and add 1713 attachments 1710 of objects 1715 to the panel 1700. The panel 1700 presents the name 1712 of an object 1715 and a level of access 1714 the user 1122 can have to the object 1715.

The panel 1700 can include a tool to model a "clean room" environment 1720 during a merger process. The clean room concept typically involves members of the involved organizations physically meeting in a room and exchanging information and objects. Typically, only the members of a clean room environment can view and examine the confidential and privileged information of other merger organizations. If the merger deal is unsuccessful and the merger deal fails, then the clean room members often leave their organization for reasons of conflicts of interest, or are transferred to other parts of their organization where they will not be interacting with the other merger organizations.

The system 10 generates a "virtual" clean room in which members of an organization can share privileged information and objects with other merger organizations. Clean room members can be easily identified and tracked.

The system 10 includes modules or tools for planning merger strategies. For instance, the system 10 can include an organizational strategy tool, a strategy management tool, a strategy risk management tool, a strategy portfolio management tool, a strategy planning tool, as well as one or more software tools presenting a user with at least one of a personalized object, a preferred object, a recently accessed object, and a merger-related object. As an illustration, an officer in an organization can want to know how to align the merger strategy with the overall organizational strategy, how to communicate the merger strategy to other stakeholders, or how to execute strategy more effectively and expeditiously. A software module assists the officer in assessing strengths and weakness of a merger strategy with an analysis management tool and a portfolio management tool. The software module also has a risk management tool to help the officer embark on the organizational strategic goals.

The executive board of an organization in the merger process can want to know how to manage and view the progress of the merger deal.
Correspondingly, another software module can have a tool to assess the strategic, cultural, and financial fit of various deal candidates. The system 10 can have a due diligence object management tool and an interface for tracking the merger deal with links to the organizational strategy.

The system 10 can have other modules to help an officer in an organization identify potential risks and strategic benefits of merger initiatives. An initiative portfolio with analytics, planning, and reporting can help the officer discern how to realign resources to accommodate new initiatives and changes to strategic direction. Also, an integrated budgeting tool and an integrated definition tool in the disclosed software can help the officer find the return on investment of each planned initiative.

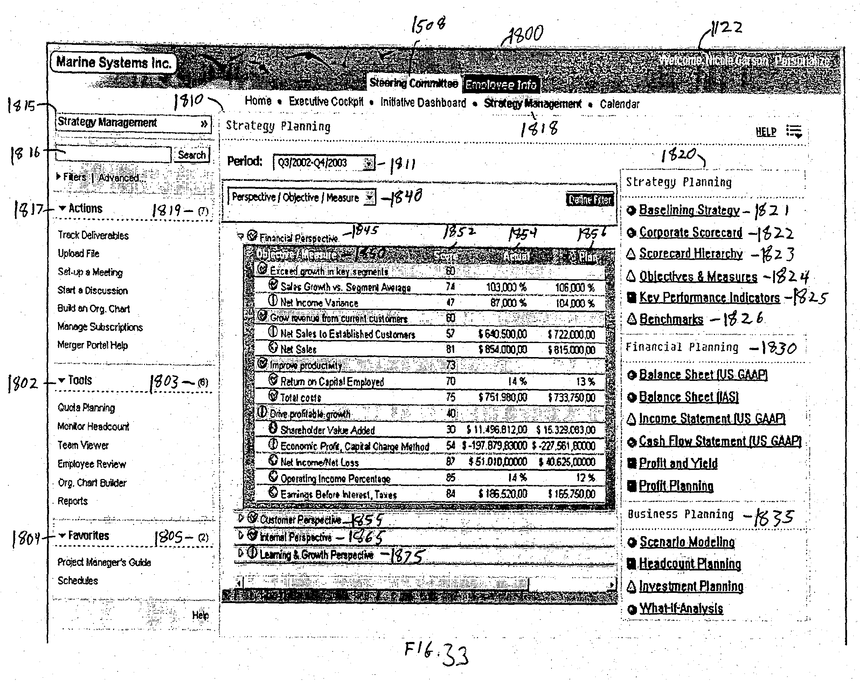

FIG. 33 illustrates an interface 1800 for strategy management 1818 in the steering committee menu 1508. A first strategy planning panel 1820 allows the user 1122 to access planning actions and objects. The panel 1820 presents a baselining strategy 1821, a corporate scorecard 1822, a scorecard hierarchy 1823, objectives and measures 1824, key performance indicators 1825, and benchmarks 1826. The interface 1800 also includes a financial planning panel to present balance sheets, income statements and profits 1830 and a business planning panel 1835 to present scenario modeling and other planning tools.

In a second strategy planning panel 1810, the user 122 can select a time period 1811 and a perspective 1840 to view merger strategy. The panel 1810 has a checklist of merger items organized by a fmancial perspective 1845, a customer perspective 1855, an internal perspective 1865, and a learning and growth perspective 1875. Each perspective exhibits a checklist of item objectives 1850 with a relative score 1852, actual results 1854 and planned results 1856.

The interface 1800 also show another panel 1815 with a search query field 1816. The interface 1800 allows the user to perform a number 1819 of action items 1817 and use a number 1803 of merger-related tools 1802 to facilitate merger workflow between stakeholders. The user 1122 can access a number 1805 of favorite objects 1804.

FIG. 34 illustrates a tool interface 1900 for stakeholder user 1122 in a merger steering committee. The steering committee has an interface tab 1508 that presents a menu of views, including the presented view of an "executive cockpit" 1915. The executive cockpit 1915 is referred to as a "Control Center" page or dashboard. The executive cockpit view 1915 allows executive board stakeholders to access, plan, and manage various aspects of the merger process. The exemplary interface 1900 charts the merger performance 1920 and presents key performance indicators 1925. The interface 1900 presents merger issues in a decision box 1930. Merger issues can be presented by type, category or priority. For example, the stakeholder user 1122 can view issues by category in a manufacturing division 1950 or in an operations department 1940. The interface 1900 also allows the stakeholder user 1122 to contact and manage other stakeholders 1951. Moreover, the interface 1900 provides accountability for merger issues, decisions, and announcements.

FIG. 35 illustrates an interface 2000 that allows stakeholders from various groups to collaborate and share information during the merger. In particular, FIG. 35 shows the interface 2000 for stakeholder user 1142 in the procurement task force. The procurement task force tab 2008 presents the stakeholder user 1142 with a menu of views, including a view 2015 for sharing objects with stakeholders in the procurement task force. The interface 2000 facilitates collaboration in presenting a view 2035 for the procurement task force stakeholders to share folders 2040 and documents 2070 with stakeholders in the operations task force.

The shared objects are objects that are internal or external to the system 10, but can coexist with each other. Examples of these externally-generated objects include an Excel@ spreadsheet 2080 or a PowerPoint® presentation 2085. The external objects 2080 and 2085 are generated by software made by Microsoft Corporation.

The stakeholder 1142 in the procurement task force also can share objects with stakeholders in a merger team 2030. Additionally, the stakeholder user 1142 can view and access other procurement task force team members 2060 and initiate merger actions 2050, such as scheduling a new meeting 2055.

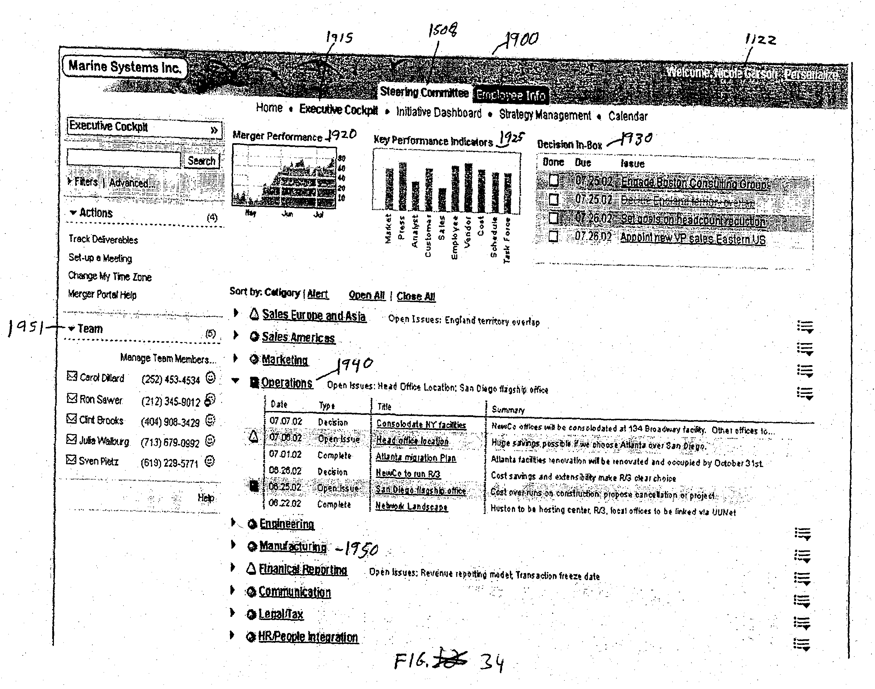

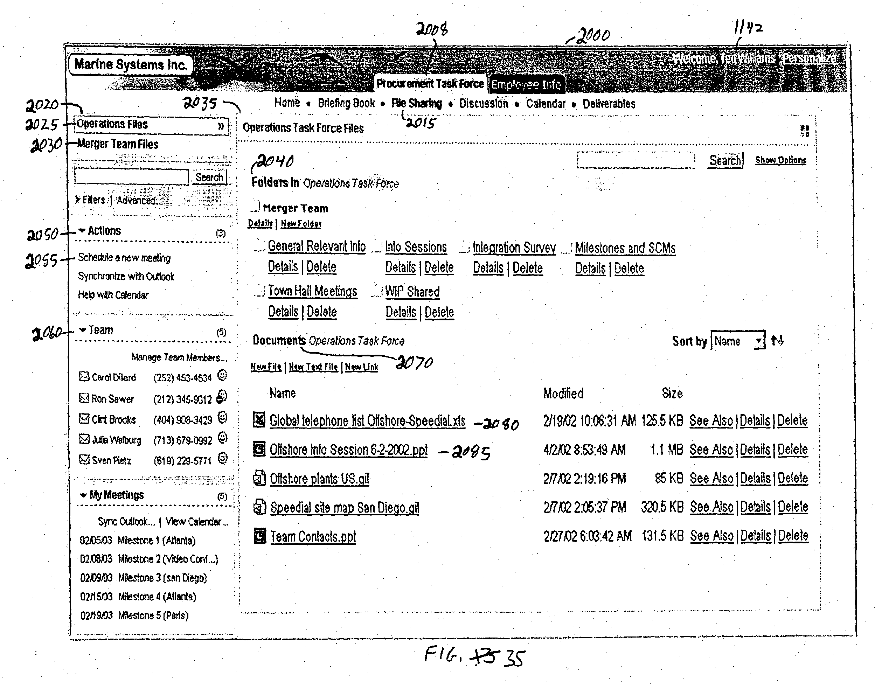

FIG. 36 illustrates an interface 2100 with a panel 2115 for group discussions. The interface user 2102 accesses a merger issue 2106 posted by a member 2104 of a team 2160. The interface 2100 shows the time 2107 and date 2105 of the posting of the issue 2106. An indicator 2155 signifies that the issue 2106 should be resolved quickly. The team member 2102 can begin a new discussion topic 2130, subscribe to a discussion 2135, or delete a discussion 2140 from the panel 2115.

The interface 2100 also facilitates collaborative discussions between members of different merger groups. For example, the interface 2100 can be accessed by members from a merger team 2122, as well as members of the operations task force team 2120.

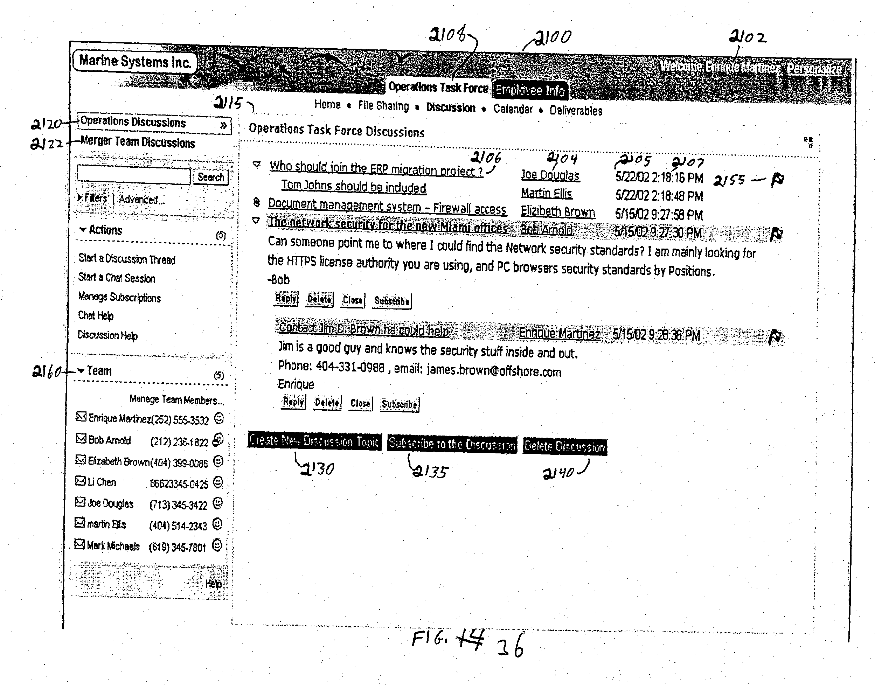

FIG. 37 shows of a collaborative calendar interface 2200 for a group 2240 in the merger process. The collaborative calendar interface 2200 has an event 2221 that can be scheduled by user 1142 or a member of a group 2240. The user 1142 can collaborate with a calendar 2212 of another merger group. The user 1142 accesses a personal calendar 2210 to incorporate all of the events from each calendar in which the user 1142 access. The personal calendar (not shown) also can store and present personal user events and meetings 2230.

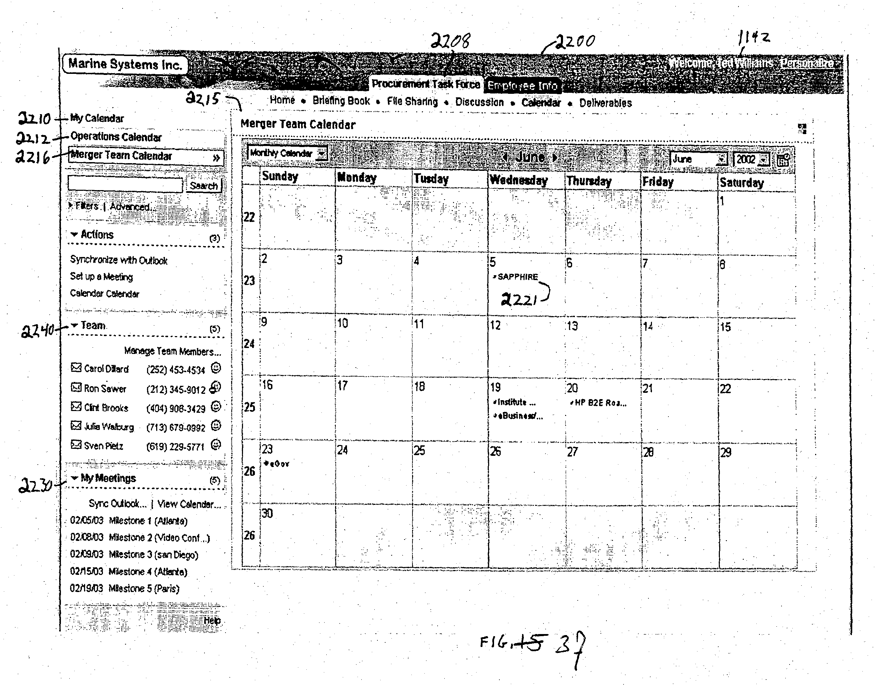

FIG. 38 shows an interface 2300 with a procurement task force tab 2308 that has a menu of views including a deliverables view 2315. The interface 2300 tracks deliverables and includes a panel 2320 with a list of personalized assigned deliverables 2330 and a list of requested deliverables 2340. Some deliverable topics 2332 include a baseline of combined spending 2350, a depletion plan 2355, an organizational structure 2360, a view of current capabilities 2365, and a view of material synergies 2370. In addition to presenting deliverable topics 2332, the panel 2320 presents a targeted merger task force 2333, an initiating deliverable contact person 2335, a deadline 2337, and a status 2339. The user 1142 can select a deliverable, such as material synergies 2370, to access another view of deliverable information.

A merger synergy realization scenario helps an organization achieve business goals and assist customers during the merger process. When achieving organizational business goals, the streamlines streamline the overall merger process for corporate development teams and integration planning teams in the pre-deal phase 1101 to integrated execution teams in the post-deal phase 1109. The system 10 provides tools and services for the exemplary synergies presented below. Such exemplary synergies include synergies related to human resources, customers, suppliers, sales, services, organizational departments and operations, and information technology (IT) issues and budgets.

Merger deals involve an increasing number of teams and stakeholders. Early in the merger process, due to secrecy limitations, only a few stakeholders are involved. Later, when other stakeholders join and take over the merger process, the original teams are usually dispersed. The addition of new stakeholders can cause disconnects in the transfer and interpretation of information, and can cause poor alignment of teams. The system 10 allows merger documentation, forwarded assignments, and aligned execution.

Additionally, the system 10 reduces the risk of information loss between merger members from pre-merger to post-merger activities. Furthermore, teams for planning and execution are well informed on the objectives and assumptions of the merger deal. These planning and execution teams collaborate and provide feedback once more detailed information is available in the due-diligence stage. The synergy progress can be tracked and measured against original targets, and the system 10 provides the required closed-loop feedback for improving synergy assumptions in the next merger deal.

Synergies generated provide customer assistance, support, and value. Additionally, merger teams have reference models for easy planning and execution, from required checklists in merger task forces to steering committee deliverables, project plans, tasks, resources, and assignments. Moreover, merger planning is integrated. Resource requirements from task forces are displayed in a common format, and all initiatives are aggregated, managed, and approved based on their estimated value.

The system 10 provides effective and efficient due diligence and risk reporting. For example, a due diligence taxonomy can be predefined and detailed checklists for due diligence tasks provided. The software can also track and alert for updates to objects, and automatically assign tasks to merger members. Furthermore, the system 10 generates a post-closing integration plan that is populated with initiatives, goals, milestones, and owners from a pre-closing phase.

The system 10 allows a user to communicate synergy information to other stakeholders, as well as include one or more software tools presenting a user with a personalized object, a preferred object, a recently accessed object, or another merger-related object. In addition to a search query interface, the system 10 includes a synergy realization interface with object trackers and assignments for synergies and risks, as well as a due diligence report.

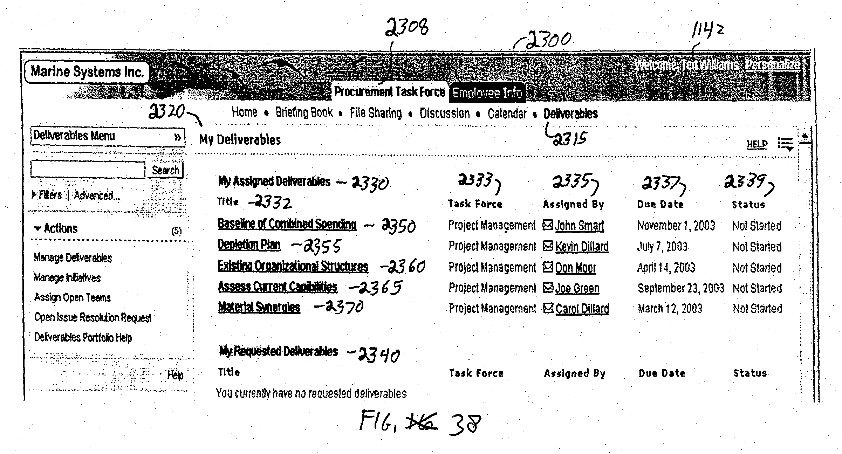

FIG. 39 shows an interface 2400 with a procurement task force tab 2308 that has a menu of views including a deliverables view 2315. A user 1142 views a synergies panel 2416 with an alerts section 2410, a synergy targets and risks section 2420, and a sub-deliverables section 2480. In the alert section 2410, the user 1142 inspects merger-related messages 2418, along with a message source 2419. The user 1142 views a net financial impact 2432 of a synergy 2430 supporting an initiative 2436 in a given time frame 2434. The user 1142 also evaluates a risk level impact 2452 of a merger risk 2450 from a plan 2454 generated by a stakeholder listed in column 2456. The sub-deliverables section 2480 presents a group of sub-deliverables 2482 with corresponding deadlines 2484 and owners 2486. The interface 2400 allows the user 1142 to consolidate suppliers 2439. The user 1142 can add other synergies and risks 2420 and sub-deliverables 2480 to the panel 2416 via links 2438, 2489.

The interface 2400 presents a general status indicator 2413 and a due date 2414. Recent news, emails 2443, checklists 2441, and objects 2442 are shown in another panel 2440. Additionally, a panel 2460 shows one or more personalized tasks 2461.

Another panel 2401 in the interface 2400 presents the user 1142 with access to several other views, including a file space view 2403, a methodology view 2404, a view of research and reports 2405, and a view of a merger log 2406. The panel 2401 includes a link (not shown) to access human resource-related synergy tools. The panel 2401 can have search capabilities 2407 and links to a number 2409 of actions 2408. Moreover, the user 1142 can contact a number 2412 of other team members 2411.

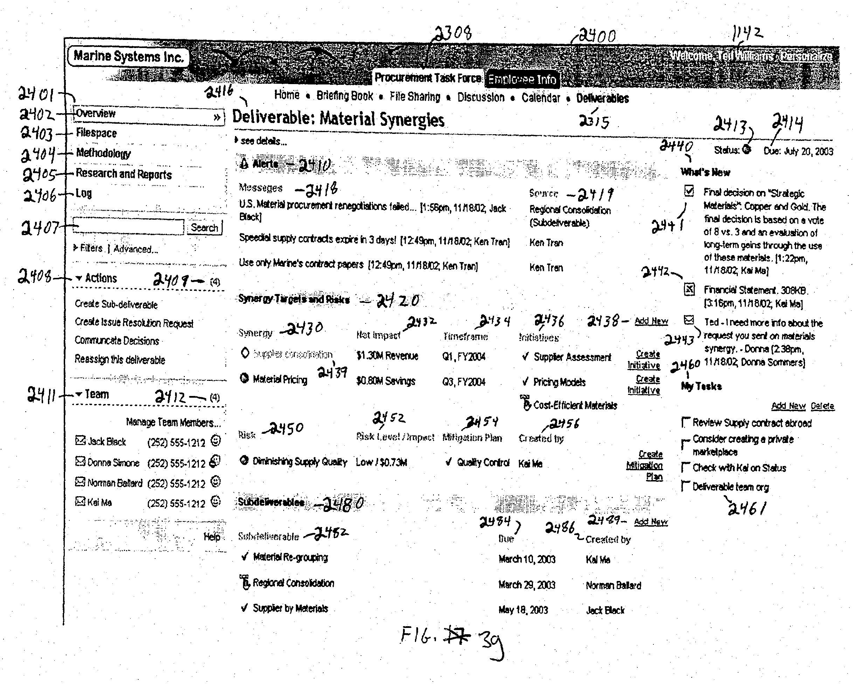

The user 1142 selects a synergy item 2430, such as supplier consolidation 2439, to access another interface 2500 in FIG. 40 of detailed synergy information. FIG. 40 shows an interface 2500 for a synergy category 2510 and synergy 2439 generated by a stakeholder 2505. The interface 2500 shows an identified value 2507 from a synergy 2510, such as a financial impact 2508 and any related attachments 2515. The identified value 2507 is identified by a stakeholder. The identified value 2507 can show a particular synergy title 2519 and a description summary 2520. The user 1142 can modify the identified value 2507 via button 2521 and generate merger-related initiatives 2530.

The interface can include a list of objects 2550 that justifies the synergy 2510 with research, reports, and financial information. The user 1142 can add an object or a link to the list 2550 via buttons 2555 and 2557, or remove 1562 a listed item via link 2562. The list 2550 can identify a particular level of user access 2565 to an object. The access level 2565 can include a clean room level of access.

Interface 2500 allows the user 1142 to properly checklist integration issues 2567. The user 1142 can add tasks via button 2570 to ensure proper integration of the synergy 2439. The user 1142 can also generate a new initiative via button 2592, cancel the synergy via button 2594, or save synergy information and close the interface 2500 via button 2590.

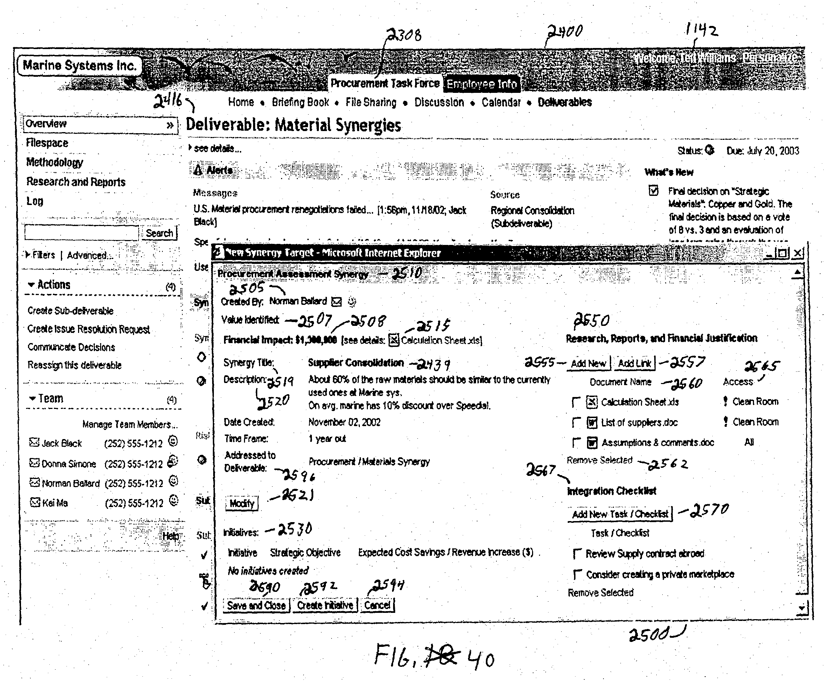

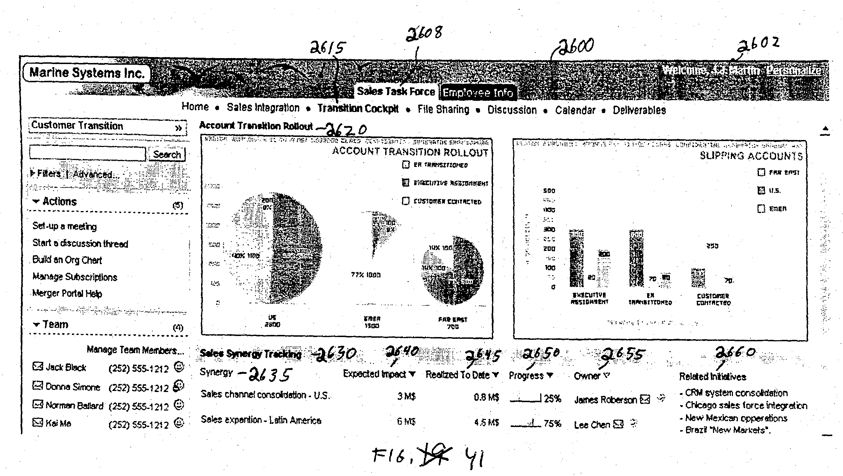

FIG. 41 shows an interface 2600 for a stakeholder user 2602 with access to a sales task force menu 2608. Other possible views for stakeholders in the sales task force interface 2600 include views for sales integration, file sharing, discussions, deliverables, and a calendar. The view presented in interface 2600 is a transition cockpit view 2615.

The view 2615 allows the stakeholder user 2602 to access and manage sales-related transition tools for the merger, including an account transition rollout 2620 and sales synergy tracking 2630. The account transition rollout 2620 shows pie charts and graphs of regional account information and accounts that are slipping from schedule. The interface 2600 also include other lists, tables, charts, and graphs of synergy information.

The stakeholder user 2602 inspects a list of sales-related synergies 2635, along with an expected financial impact 2640. The synergy list 2635 shows a measure of the progress of synergies 2650 and a real-time financial impact estimation 2645. The synergy list 2635 can also present related synergy owners 2655 and related initiatives 2660.

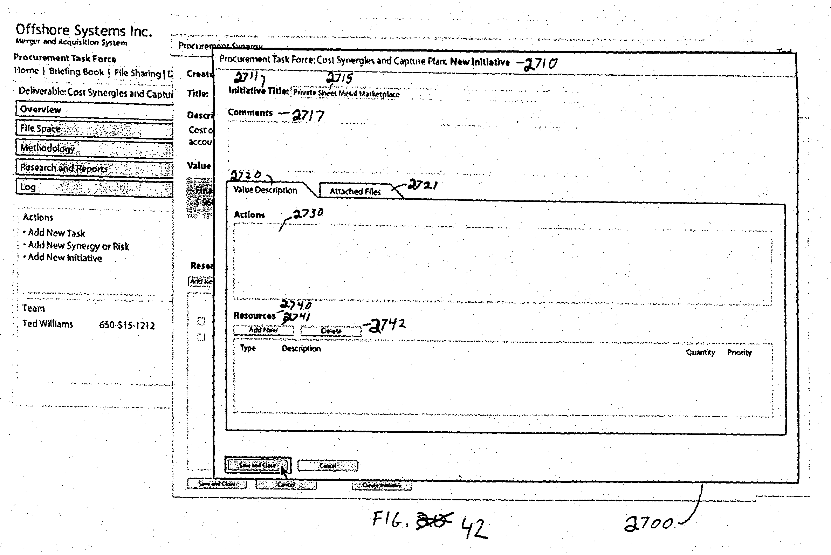

FIG. 42 shows an interface 2700 for adding a new initiative 2710 for a synergy in a merger task force. The interface 2700 has a field 2715 for an initiative title 2711 and a field 2717 for comments. The interface 2700 includes a tabbed panel 2720 for a value description and another tabbed panel 2721 for any attached files. One or more actions 2730 can be entered into a user action field 2730. Moreover, one or more merger-related resources 2740 can be added or deleted from the initiative 2710 via buttons 2741, 2742.

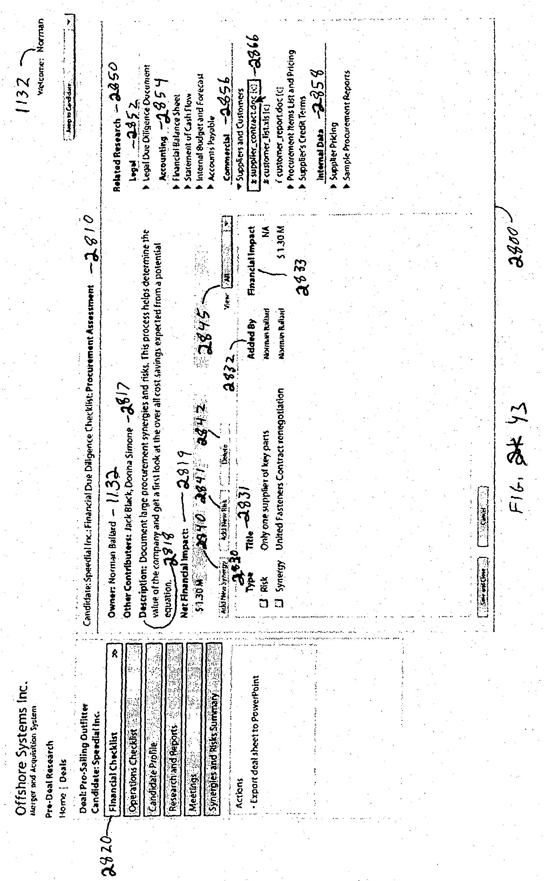

FIG. 43 shows an interface 2800 with a financial checklist 2820 and checklist item 2810. The interface 2800 is presented during the deal management 1125. The user 1132 can add a synergy or a risk to the financial checklist 2820 via buttons 2840, 2841. User 1132 can also delete an item from the checklist 2820 via button 2842. Along with detailed description 2818 of a checklist item 2810, the interface 2800 presents the name of an owner 2132 and other contributors 2817 for the item 2810. The interface 2800 allows a user 1132 to view 2845 all of the entered risks and synergies by type 2830, title 2831, owner 2832, and financial impact 2833. The interface 2800 also presents related research 2850 with one or more lists of legal 2852, accounting 2854, commercial 2856, and internal data 2858.

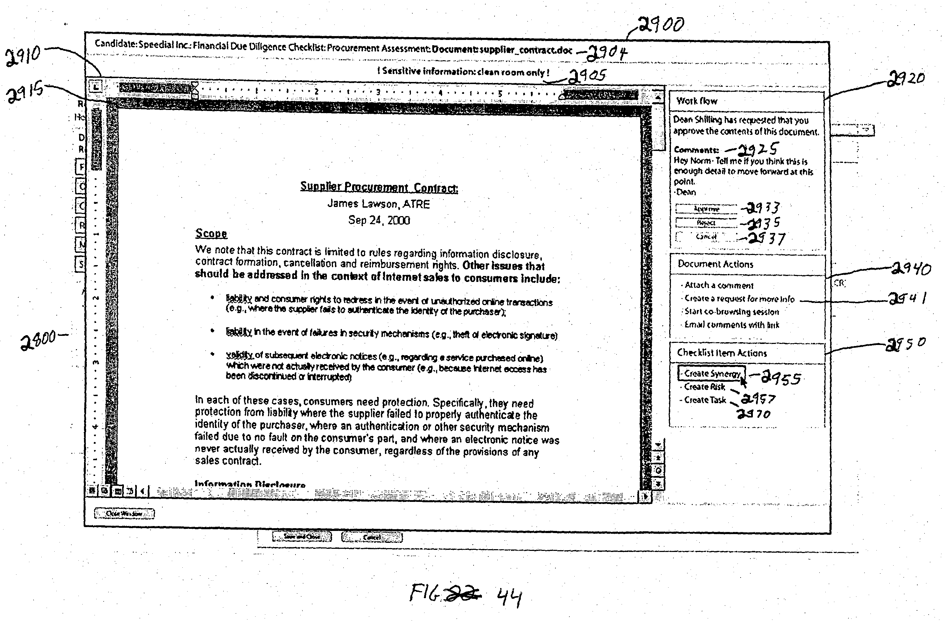

FIG. 44 presents an interface 2900 with a panel 2910 for an object (e.g., a document) 2915 in a merger checklist 2904. The interface 2900 is presented when a supplier contract document 2866 is selected from interface 2800. The interface 2900 identifies that the object 2915 includes sensitive information for a clean room participant 2905. The interface 2900 includes a panel 2920 to facilitate merger workflow between stakeholders. The panel 2920 allows a user to easily approve, reject, or cancel a request via buttons 2933, 2935, 2937. The panel 2920 can also include comments 2925 from a stakeholder.

The interface 2900 can include a panel 2940 for one or more document actions, such as generating a request 2941. Furthermore, the interface 2900 can include a checklist item actions panel 2950 to allow a user to generate a synergy 2955, a risk 2957, or a task 2970.

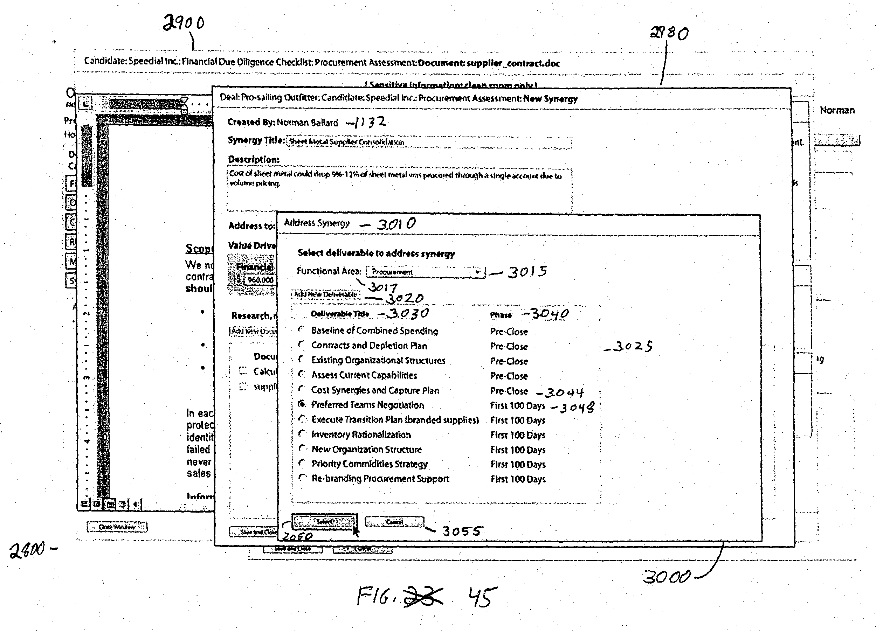

FIG. 45 presents several synergy interfaces. A user can select the generate synergy link 2955 in a panel 2950 to access a new synergy interface 2980. The new synergy interface 2980 is similar to the synergy interface 2500. If user 1132 decides to address a deliverable 3015 to a synergy target 3010, as shown 2596, then a new interface 3000 is presented. The interface 3000 allows the user 1132 to select a functional area 3017 for the synergy via pull down menu field 3015. The user 1132 can add a new deliverable to a list 3025 of deliverables via button 3020. The list 3025 presents a deliverable title 3030 and a merger phase 3040 for the deliverable, such as a pre-close phase 3044 or a phase 3048 in the first 100 days of the merger. The interface 3000 allows the user 1132 to submit or cancel the new address synergy 3010 via buttons 3050, 3055.

In an aspect, the invention features a method of facilitating enterprise change including treating two or more information systems as a single logical information system to execute pre-change due diligence and post-change integration of an enterprise change, wherein the enterprise change can be at least one of a merger and acquisition, and providing a user interface to allow a user to conduct a synergy realization.

In embodiments, the method can include allowing the user to conduct a merger-related activity with at least one of a software task, a software technique, and a software interface, wherein the software interface includes a graphical user interface.

In another aspect, the invention features a method including generating a single logical physically distributed information system across one or more information systems of at least two enterprises, wherein the enterprises can be being combined, and providing a user interface to access the single logical physically distributed information system, the single logical physically distributed information system executing one or more pre-merger activities, merger activities, and post-merger activities, the merger activities including a synergy realization.

In embodiments, the user interface can be adapted to at least one of a role of the user and a phase of the merger, the user role including a role of a merger member.

In another aspect, the invention features a system for implementing a merger of at least two organizations, the system comprising a software product and an interface for a user to edit synergy information for at least one of the organizations.

In embodiments, the software product can include reference modules adapted for merger teams, the reference modules including checklists, deliverables, project plans, tasks, resources, and assignments. The interface can include information for a financial impact, an indicator of a priority level for an issue, a scale of measurement for synergy realization, and a selector for approval of one or more synergies and one or more risks.

In another aspect, the invention features a system for planning a merger of at least two organizations, the system comprising a synergy realization user interface, the synergy realization user interface including a synergy targets section, a risks section, and a sub-deliverables section.

In embodiments, the synergy realization interface can comprise a section for merger-related alerts, news, and messages, the synergy targets section including a synergy and an initiative, the risks section including a risk level impact, the sub-deliverables section including sub-deliverables and deadlines, the synergy realization interface further including one or more links. The system can also include a panel adapted to present merger-related views, the panel including a link to a file space view, a link to a methodology view, a link to a view of research and reports, and a link to a view of a merger log. The system can include an interface for a synergy category, the interface for a synergy category including an identified value, a list of objects, and a checklist of integration issues, the identified value including a financial impact, the list of objects including research information, reports, and financial information.

In another aspect, the invention features a system including an interface adapted to present a financial checklist relating to an organization in a merger of at least two organizations the financial checklist including a risk and a synergy, the interface including a button adapted to add an item to the checklist, and a button to delete an item from the checklist, and one or more lists of legal data, accounting data, and data internal to at least one of the organizations.

In embodiments, the interface further can include a synergy type, a synergy title, a synergy owner, and a synergy financial impact.
In another aspect, the invention features a system for planning a merger of at least two organizations, the system comprising one or more synergy-related interfaces presenting at least one of merger financial information, a merger risk, a description of a merger risk, a description of a synergy, a log of a plurality of merger actions, and an interface for one or more user actions related to the merger.

In embodiments, the merger financial information can comprise a budget, a return on investment, a cost savings, an estimated impact, an actual impact, and financial resources. The one or more user actions can include an approval action, a rejection action, a cancellation action, and a storing action.

In another aspect, the invention features a system for planning a merger of at least two organizations, the system including a user interface a layer of merger application logic services, and tools for sales-related synergies of at least one of the organizations.
In embodiments, the system can include one or more interfaces for sales integration, account transitions, file sharing, discussions, deliverables, and calendars. The invention is concerned with systems and techniques relating to software for enterprise change, in particular to merger and acquisition processes and tools for one or more organizations. A system for planning a merger of at least two organizations includes at least one of an organizational strategy tool, a strategy management tool, a strategy risk management tool, a strategy portfolio management tool, a strategy planning tool, and one or more software tools presenting a user with at least one of a personalized object, a preferred object, a recently accessed object, and a merger-related object.

The details of one or more embodiments of the invention are set forth in the accompanying drawings and the description below. Other features, objects, and advantages of the invention will be apparent from the description and drawings, and from the claims.

## Claims

1. A method of planning a restructuring of at least two organizations comprising:
providing a single logical physically distributed information system across one or more information systems of the at least two organizations that are being combined; and
providing a user interface to access the single logical physically distributed information system, wherein the single logical physically distributed information system executes one or more pre-merger activities, merger activities, and/or post-merger activities.

2. A method according to claim 1, comprising adapting the user interface to allow a user to access one or more merger resources, to allow a stakeholder to plan and manage the merger activity.

3. A method according to claim 1, comprising providing an intranet interface adapted for at least one employee of one of the enterprises; and providing an extranet interface adapted for an external restructuring member of at least one of the organizations; and providing an information repository related to at least one of the organizations, the information repository being accessible by the intranet interface.

4. A method according to claim 3, comprising providing the extranet interface with a password interface, and providing a firewall between the intranet interface and extranet interface.

5. A method according to claim 1, comprising providing an object modelling tool, a repository, a template, and an interface for a user to edit information for one or more personnel of at least one of the organizations.

6. A method according to claim 5, wherein the repository comprises metadata.

7. A method according to claim 1, comprising providing a tool adapted to track one or more stakeholders; providing a module adapted to identify one or more stakeholders; and providing a tool interface adapted to allow a stakeholder to access, plan, and manage pre-deal research.

8. A method according to claim 1, comprising providing a stakeholder interface, the stakeholder interface comprising: a first panel adapted to allow a user to navigate among a user interfaces related to the merger; a second panel displaying one or more members of one or more groups of the organizations; and a search query interface adapted to allow a user to search for information related to the merger.

9. A method according to claim 8, comprising further providing the stakeholder interface with a menu for disparate interfaces, the disparate interfaces comprising a communication interface, an information sessions interface, and an organizational directory, the stakeholder interface being further provided with a personalized merger task interface, a merger event interface, and an interface to a calendar.

10. A method according to claim 9, comprising providing one or more tools presenting a stakeholder with at least any one of a personalized object, a preferred object, a recently accessed object, and a merger-related object.

11. A method according to claim 1, comprising: providing a layer of merger application logic services for the merger of at least two organizations; information repositories for the merger; and user interfaces adapted to retrieve information from the information repositories, the user interfaces adapted to interact with the layer of merger application logic services.

12. A method according to claim 1, further comprising providing a definition tool, wherein the definition tool is an integrated system tool.

13. A method according to claim 1, further comprising executing actions for a merger of the at least two organizations, the actions comprising: registering a stakeholder of the merger; and initiating a profile for the stakeholder; allowing a personal delegate to access a merger interface on behalf of the stakeholder, wherein the registering a stakeholder of the merger comprises providing access to a user of a user interface, wherein the providing access comprises requesting a password from the user.

14. A method according to claim 1, wherein a merger activity includes a synergy realization.

15. A method according to claim 14, including providing an interface for a user to edit synergy information for at least one of the organizations.

16. A method according to claim 14, including providing a synergy realization user interface, the synergy realization user interface including a synergy targets section, a risks section, and a sub-deliverables section.

17. A method according to claim 14, including providing an interface for a synergy category, the interface for a synergy category including an identified value, a list of objects, and a checklist of integration issues, the identified value including a financial impact, the list of objects including research information, reports, and financial information.

18. A method according to claim 14, including receiving one or more user actions, wherein the one or more user actions comprise an approval action, a rejection action, a cancellation action, and a storing action.

19. A method according to claim 14, including providing a user interface a layer of merger application logic services, and tools for sales-related synergies of at least one of the organizations.

20. A method according to claim 14, including providing one or more interfaces for sales integration, account transitions, file sharing, discussions, deliverables, and calendars.

21. A system for planning a restructuring of at least two organizations comprising:
a single logical physically distributed information system across one or more information systems of the at least two organizations that are being combined; and
a user interface to access the single logical physically distributed information system, wherein the single logical physically distributed information system executes one or more pre-merger activities, merger activities, and/or post-merger activities.

22. A system according to claim 21, comprising an intranet interface adapted for at least one employee of one of the enterprises; an extranet interface adapted for an external restructuring member of at least one of the organizations; and an information repository related to at least one of the organizations, the information repository being accessible by the intranet interface.

23. A system according to claim 22, wherein the extranet interface comprises a password interface, wherein the system further comprises a firewall between the intranet interface and extranet interface.

24. A system according to claim 21, comprising an object modelling tool, a repository, a template, and an interface for a user to edit information for one or more personnel of at least one of the organizations.

25. A system according to claim 24, wherein the repository comprises metadata.

26. A system according to claim 21, comprising a tool adapted to track one or more stakeholders; providing a module adapted to identify one or more stakeholders; and providing a tool interface adapted to allow a stakeholder to access, plan, and manage pre-deal research.

27. A system according to claim 21, comprising a stakeholder interface, the stakeholder interface comprising: a first panel adapted to allow a user to navigate among a user interfaces related to the merger; a second panel displaying one or more members of one or more groups of the organizations; and a search query interface adapted to allow a user to search for information related to the merger.

28. A system according to claim 27, wherein the stakeholder interface further comprises a menu for disparate interfaces, the disparate interfaces comprising a communication interface, an information sessions interface, and an organizational directory, the stakeholder interface further comprising a personalized merger task interface, a merger event interface, and an interface to a calendar.

29. A system according to claim 28, wherein the system further comprises one or more tools presenting a stakeholder with at least any one of a personalized object, a preferred object, a recently accessed object, and a merger-related object.

30. A system according to claim 21, comprising: a layer of merger application logic services for the merger of at least two organizations; information repositories for the merger; and user interfaces adapted to retrieve information from the information repositories, the user interfaces adapted to interact with the layer of merger application logic services.

31. A system according to claim 21, further comprising a definition tool, wherein the definition tool is an integrated system tool.

32. A system according to claim 21, wherein a merger activity includes a synergy realization.

33. A system according to claim 32, comprising an interface for a user to edit synergy information for at least one of the organizations.

34. A user terminal means comprising means operable to perform the methods of any of claims 1-20.

35. A program storage device readable by a processing apparatus, the device embodying a program of instructions executable by the processor to perform the steps of any one of claims 1-20.
